(19) Europäisches Patentamt
European Patent Office
Office européen des brevets

(11) **EP 3 487 102 A1**

(12) **EUROPEAN PATENT APPLICATION**
published in accordance with Art. 153(4) EPC

(43) Date of publication:
**22.05.2019 Bulletin 2019/21**

(51) Int Cl.:
***H04L 5/00*** *(2006.01)*

(21) Application number: **16912261.1**

(86) International application number:
**PCT/CN2016/094669**

(22) Date of filing: **11.08.2016**

(87) International publication number:
**WO 2018/027806 (15.02.2018 Gazette 2018/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Huawei Technologies Co., Ltd.
Longgang District
Shenzhen, Guangdong 518129 (CN)**

(72) Inventors:
• **HE, Chuanfeng
Shenzhen
Guangdong 518129 (CN)**
• **QU, Bingyu
Shenzhen
Guangdong 518129 (CN)**

(74) Representative: **Maiwald Patent- und
Rechtsanwaltsgesellschaft mbH
Elisenhof
Elisenstraße 3
80335 München (DE)**

(54) **DEMODULATION REFERENCE SIGNAL TRANSMISSION METHOD AND RELATED DEVICE**

(57) The present invention discloses a demodulation reference signal transmission method and a related device. The method includes: sending, by a network device, configuration parameter indication information of a demodulation reference signal to a terminal device, where the configuration parameter indication information includes an index, the configuration parameter indication information is used to indicate a configuration parameter set corresponding to the index, the configuration parameter set includes a frequency-domain comb, and a mapping relationship between the configuration parameter set and the index is a mapping relationship in a preset first demodulation reference signal mapping relationship set; and receiving, by the network device, the demodulation reference signal based on the configuration parameter set. According to embodiments of the present invention, an application scenario in which more than two paired terminal devices having different layers perform MU-MIMO transmission and scheduling bandwidths of the paired terminal devices partially overlap can be supported.

Network device · Terminal device

S501. Send configuration parameter indication information of a demodulation reference signal to user equipment, where the configuration parameter indication information includes an index, the configuration parameter indication information is used to indicate a configuration parameter set corresponding to the index, the configuration parameter set includes a frequency-domain comb, and a mapping relationship between the configuration parameter set and the index is a mapping relationship in a preset first demodulation reference signal mapping relationship set

Configuration parameter indication information

S502. Receive the configuration parameter indication information of the demodulation reference signal, where the configuration parameter indication information includes the index

S503. Determine, based on the mapping relationship that is between the index and the configuration parameter set and that is in the preset first demodulation reference signal mapping relationship set, the configuration parameter set corresponding to the received index, where the determined configuration parameter set includes the frequency-domain comb

S504. Send the demodulation reference signal based on the determined configuration parameter set

Demodulation reference signal

S505. Receive, based on the configuration parameter set, the demodulation reference signal sent by the user equipment

FIG. 5

**Description**

**TECHNICAL FIELD**

The present invention relates to the field of wireless communications technologies, and in particular, to a demodulation reference signal transmission method and a related device.

**BACKGROUND**

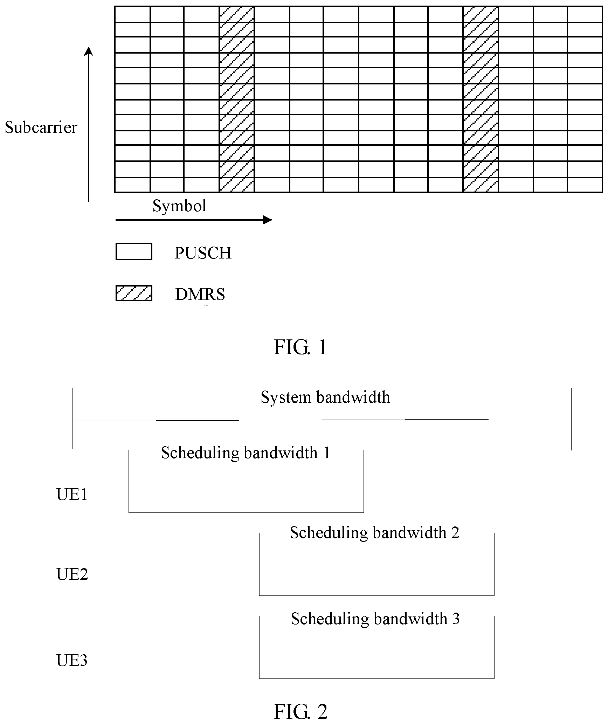

In an uplink of 3GPP (3rd Generation Partnership Project, 3rd Generation Partnership Project) LTE (Long Term Evolution, Long Term Evolution), a PUSCH (Physical Uplink Shared Channel: physical uplink shared channel) and a PUCCH (Physical Uplink Control Channel: physical uplink control channel) are both sent in a form of consecutive subframes. One subframe includes two slots, and each slot includes several DFT-S-OFDM (Discrete-Fourier-Transform Spread Orthogonal Frequency Division Multiplexing, discrete Fourier transform spread orthogonal frequency division multiplexing) symbols. A DMRS (De Modulation Reference Signal, demodulation reference signal) is used by a base station end to perform coherent demodulation on the PUSCH and the PUCCH. In time domain, the DMRS and the PUSCH/PUCCH are sent on different DFT-S-OFDM symbols. In frequency domain, the DMRS and the PUSCH/PUCCH are transmitted on a same RB (Resource Block, resource block). As shown in FIG. 1, one RB includes 12 subcarriers, and one uplink subframe includes 14 symbols, two symbols of which are used to carry a DMRS. The DMRS occupies all the 12 subcarriers in the RB.

In a MIMO (multi-input multi-output, multi-input multi-output) technology, uplink PUSCH transmission may be divided into SU (Single User, single-user) MIMO transmission and MU (Multiple User, multiple-user) MIMO transmission. For SU-MIMO UEs, orthogonalization can be implemented by allocating different RBs to different UEs. An MU-MIMO manner allows a same RB to be allocated to different UEs, and UEs satisfying a particular condition multiplex the same RB in the MU-MIMO manner for transmission. Depending on bandwidth allocation types of multiplexing UEs, the MU-MIMO transmission may further be divided into two types: uplink MU-MIMO transmission with completely overlapping bandwidths (bandwidths of different multiplexing UEs completely overlap) and uplink MU-MIMO transmission with partially overlapping bandwidths (bandwidths of different multiplexing UEs partially overlap). As shown in FIG. 2, in MU-MIMO transmission, a scheduling bandwidth of UE 1 partially overlaps a scheduling bandwidth of UE 2 or UE 3, and scheduling bandwidths of the UE 2 and the UE 3 completely overlap. In an overlapping bandwidth part, all DMRSs of different UEs need to keep orthogonal regardless of a bandwidth allocation type. For the uplink MU-MIMO transmission with completely overlapping bandwidths, DMRSs of different multiplexing UEs can be orthogonal to each other by using different CS (Cyclic Shift, cyclic shift) sequences and/or OCC (Orthogonal Cover Code, orthogonal cover code) combinations based on a same DMRS base sequence. For the uplink MU-MIMO transmission with partially overlapping bandwidths, DMRSs from different multiplexing UEs can be orthogonal to each other only by using orthogonal cover code OCC combinations. A length of an OCC is 2, and therefore, for the uplink MU-MIMO transmission with partially overlapping bandwidths, a maximum quantity of multiplexing users that can be supported is 2.

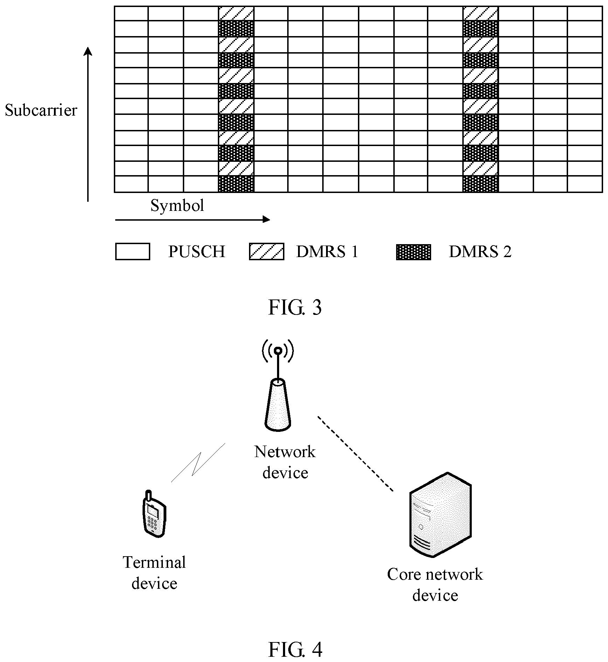

In the LTE R14 standard, a DMRS is enhanced. In an MU-MIMO scenario with partially overlapping bandwidths, more orthogonal DMRSs are supported, to support more multiplexing users with partially overlapping bandwidths to perform MU-MIMO transmission. A method is using different subcarriers to carry different DMRSs within a sending bandwidth. As shown in FIG. 3, subcarriers used by DMRSs have comb-like (comb like) distribution within a sending bandwidth, and different DMRSs may occupy different frequency-domain combs comb, thereby achieving orthogonality between the DMRS signals in frequency domain. Therefore, a quantity of orthogonal DMRSs is added on the basis of orthogonality using cyclic shift CS sequences and orthogonal cover code OCC combinations. Such a comb-like DMRS may also be referred to as an IFDM (Interleaved Frequency Division Multiple, interleaved frequency division multiplexing) DMRS.

**SUMMARY**

This application provides a demodulation reference signal transmission method and a related device, so that an application scenario in which more than two paired terminal devices having different layers perform MU-MIMO transmission and scheduling bandwidths of the paired terminal devices partially overlap can be supported.

According to a first aspect, an embodiment of the present invention provides a demodulation reference signal transmission method, including:

sending, by a network device, configuration parameter indication information of a demodulation reference signal to a terminal device, where the configuration parameter indication information includes an index, the configuration parameter indication information is used to indicate a configuration parameter set corresponding to the index, the configuration parameter set includes a frequency-domain comb, and a mapping relationship between the configuration parameter set and the index is a mapping relationship in a preset first demodulation reference signal mapping relationship set; and

receiving, by the network device based on the configuration parameter set, the demodulation reference signal sent by the terminal device.

With reference to the first aspect, in some possible implementations, before the sending, by the network device, the configuration parameter indication information of the demodulation reference signal to the terminal device, the method further includes:

sending, by the network device, demodulation reference signal mapping relationship set indication information, where the demodulation reference signal mapping relationship set indication information is used to indicate the first demodulation reference signal mapping relationship set in at least two preset demodulation reference signal mapping relationship sets.

With reference to the first aspect, in some possible implementations, the configuration parameter set further includes at least one of a cyclic shift sequence and an orthogonal cover code combination, the first demodulation reference signal mapping relationship set includes at least two indexes, and the at least two indexes include a first index and a second index;

if four orthogonal cover codes in a first orthogonal cover code combination corresponding to the first index are respectively the same as four orthogonal cover codes in a second orthogonal cover code combination corresponding to the second index, a first frequency-domain comb corresponding to the first index is different from a second frequency-domain comb corresponding to the second index; or

if a first frequency-domain comb corresponding to the first index is the same as a second frequency-domain comb corresponding to the second index, four orthogonal cover codes in a first orthogonal cover code combination corresponding to the first index are respectively different from four orthogonal cover codes in a second orthogonal cover code combination corresponding to the second index.

With reference to the first aspect, in some possible implementations, the configuration parameter set further includes at least one of a cyclic shift sequence and an orthogonal cover code combination, the first demodulation reference signal mapping relationship set includes at least two indexes, and the at least two indexes include a first index set and a second index set; in four orthogonal cover codes in an orthogonal cover code group corresponding to each index in the first index set, the first two orthogonal cover codes are the same, the second two orthogonal cover codes are the same, and the first two orthogonal cover codes are different from the second two orthogonal cover codes; four orthogonal cover codes in an orthogonal cover code group corresponding to each index in the second index set are the same;

the first index set includes at least a first index and a second index; and if the first two orthogonal cover codes in a first orthogonal cover code combination corresponding to the first index are respectively the same as the first two orthogonal cover codes in a second orthogonal cover code combination corresponding to the second index, a first frequency-domain comb corresponding to the first index is different from a second frequency-domain comb corresponding to the second index; or if a first frequency-domain comb corresponding to the first index is the same as a second frequency-domain comb corresponding to the second index, the first two orthogonal cover codes in a first orthogonal cover code combination corresponding to the first index are different from the first two orthogonal cover codes in a second orthogonal cover code combination corresponding to the second index; or

the second index set includes at least a third index and a fourth index; and if the first two orthogonal cover codes in a third orthogonal cover code combination corresponding to the third index are respectively the same as the first two orthogonal cover codes in a fourth orthogonal cover code combination corresponding to the fourth index, a third frequency-domain comb corresponding to the third index is different from a fourth frequency-domain comb corresponding to the fourth index; or if a third frequency-domain comb corresponding to the third index is the same as a fourth frequency-domain comb corresponding to the fourth index, four orthogonal cover codes in a third orthogonal cover code combination corresponding to the third index are different from four orthogonal cover codes in a fourth orthogonal cover code combination corresponding to the fourth index.

With reference to the first aspect, in some possible implementations, the at least two demodulation reference signal mapping relationship sets further include a second demodulation reference signal mapping relationship set, and a configuration parameter set corresponding to an index in the second demodulation reference signal mapping relationship set does not include a frequency-domain comb.

With reference to the first aspect, in some possible implementations, the demodulation reference signal mapping relationship set indication information that is used to indicate the first demodulation reference signal mapping relationship set is sent when the network device determines a first condition, and the first condition is:

a manner in which the network device schedules the terminal device is a multiple-user multi-input multi-output MU-MIMO manner, and bandwidths scheduled by the network device for MU-MIMO paired terminal devices partially overlap, where a quantity of the MU-MIMO paired terminal devices is greater than 2.

With reference to the first aspect, in some possible implementations, the network device further includes: a processing unit, configured to: when determining a second condition, send, by using the sending unit, demodulation reference signal mapping relationship set indication information that is used to indicate the second demodulation reference signal mapping relationship set, where the second condition is:

a manner in which the network device schedules the terminal device is a single-user SU manner; or a manner in which the network device schedules the terminal device is an MU-MIMO manner, and bandwidths scheduled by the network device for MU-MIMO paired terminal devices completely overlap; or a manner in which the network device schedules the terminal device is an MU-MIMO manner, and bandwidths scheduled by the network device for MU-MIMO paired terminal devices partially overlap, where a quantity of the MU-MIMO paired terminal devices is less than or equal to 2.

With reference to the first aspect, in some possible implementations, a sending manner of the demodulation reference signal mapping relationship set indication information includes either of the following manners: sending by using downlink control information DCI related to uplink scheduling; and sending by using radio resource control RRC signaling.

According to a second aspect, an embodiment of the present invention provides a demodulation reference signal transmission method, including:

receiving, by a terminal device, configuration parameter indication information of a demodulation reference signal, where the configuration parameter indication information includes an index;
determining, by the terminal device based on a mapping relationship that is between an index and a configuration parameter set and that is in a preset first demodulation reference signal mapping relationship set, a configuration parameter set corresponding to the received index, where the determined configuration parameter set includes a frequency-domain comb; and
sending, by the terminal device, the demodulation reference signal based on the determined configuration parameter set.

With reference to the second aspect, in some possible implementations, before the receiving, by a terminal device, configuration parameter indication information of a demodulation reference signal, the method further includes: receiving, by the terminal device, demodulation reference signal mapping relationship set indication information, where the demodulation reference signal mapping relationship set indication information is used to indicate the first demodulation reference signal mapping relationship set in at least two preset demodulation reference signal mapping relationship sets.

With reference to the second aspect, in some possible implementations, the configuration parameter set further includes at least one of a cyclic shift sequence and an orthogonal cover code combination, the first demodulation reference signal mapping relationship set includes at least two indexes, and the at least two indexes include a first index and a second index;
if four orthogonal cover codes in a first orthogonal cover code combination corresponding to the first index are respectively the same as four orthogonal cover codes in a second orthogonal cover code combination corresponding to the second index, a first frequency-domain comb corresponding to the first index is different from a second frequency-domain comb corresponding to the second index; or
if a first frequency-domain comb corresponding to the first index is the same as a second frequency-domain comb corresponding to the second index, four orthogonal cover codes in a first orthogonal cover code combination corresponding to the first index are respectively different from four orthogonal cover codes in a second orthogonal cover code combination corresponding to the second index.

With reference to the second aspect, in some possible implementations, the configuration parameter set further includes at least one of a cyclic shift sequence and an orthogonal cover code combination, the first demodulation reference signal mapping relationship set includes at least two indexes, and the at least two indexes include a first index set and a second index set; in four orthogonal cover codes in an orthogonal cover code group corresponding to each index in the first index set, the first two orthogonal cover codes are the same, the second two orthogonal cover codes are the same, and the first two orthogonal cover codes are different from the second two orthogonal cover codes; four orthogonal cover codes in an orthogonal cover code group corresponding to each index in the second index set are the same;
the first index set includes at least a first index and a second index; and if the first two orthogonal cover codes in a first orthogonal cover code combination corresponding to the first index are respectively the same as the first two orthogonal cover codes in a second orthogonal cover code combination corresponding to the second index, a first frequency-domain comb corresponding to the first index is different from a second frequency-domain comb corresponding to the second index; or if a first frequency-domain comb corresponding to the first index is the same as a second frequency-domain comb corresponding to the second index, the first two orthogonal cover codes in a first orthogonal cover code combination corresponding to the first index are different from the first two orthogonal cover codes in a second orthogonal cover code combination corresponding to the second index; or

the second index set includes at least a third index and a fourth index; and if the first two orthogonal cover codes in a third orthogonal cover code combination corresponding to the third index are respectively the same as the first two orthogonal cover codes in a fourth orthogonal cover code combination corresponding to the fourth index, a third frequency-domain comb corresponding to the third index is different from a fourth frequency-domain comb corresponding to the fourth index; or if a third frequency-domain comb corresponding to the third index is the same as a fourth frequency-domain comb corresponding to the fourth index, four orthogonal cover codes in a third orthogonal cover code combination corresponding to the third index are different from four orthogonal cover codes in a fourth orthogonal cover code combination corresponding to the fourth index.

With reference to the second aspect, in some possible implementations, the at least two demodulation reference signal mapping relationship sets further include a second demodulation reference signal mapping relationship set, and a configuration parameter set corresponding to an index in the second demodulation reference signal mapping relationship set does not include a frequency-domain comb.

With reference to the second aspect, in some possible implementations, a receiving manner of the demodulation reference signal mapping relationship set indication information includes either of the following manners:

receiving by using downlink control information DCI related to uplink scheduling; and receiving by using radio resource control RRC signaling.

According to a third aspect, an embodiment of the present invention provides a network device. The network device includes functional modules, and the functional modules are configured to perform some or all of the steps described in any method according to the first aspect of embodiments of the present invention.

Specifically, the network device may include a sending unit and a receiving unit.

The sending unit is configured to send configuration parameter indication information of a demodulation reference signal, where the configuration parameter indication information includes an index, the configuration parameter indication information is used to indicate a configuration parameter set corresponding to the index, the configuration parameter set includes a frequency-domain comb, and a mapping relationship between the configuration parameter set and the index is a mapping relationship in a preset first demodulation reference signal mapping relationship set.

The receiving unit is configured to receive, based on the configuration parameter set, the demodulation reference signal sent by the terminal device.

According to a fourth aspect, an embodiment of the present invention provides a terminal device. The terminal device includes functional modules, and the functional modules are configured to perform some or all of the steps described in any method according to the second aspect of embodiments of the present invention.

Specifically, the terminal device may include a receiving unit, a processing unit, and a sending unit.

The receiving unit is configured to receive configuration parameter indication information of a demodulation reference signal, where the configuration parameter indication information includes an index.

The processing unit is configured to determine, based on a mapping relationship that is between an index and a configuration parameter set and that is in a preset first demodulation reference signal mapping relationship set, a configuration parameter set corresponding to the received index, where the determined configuration parameter set includes a frequency-domain comb.

The sending unit is configured to send the demodulation reference signal based on the determined configuration parameter set.

According to a fifth aspect, an embodiment of the present invention provides a network device, including:

a processor, a memory, a receiver, a transmitter, and a bus, where the processor, the receiver, the transmitter, and the memory are connected by using the bus and communicate with each other; and
the processor is configured to invoke executable program code stored in the memory, to perform some or all of the steps described in any method according to the first aspect of embodiments of the present invention.

According to a sixth aspect, an embodiment of the present invention provides a terminal device, including:

a processor, a memory, a receiver, a transmitter, and a bus, where the processor, the receiver, the transmitter, and the memory are connected by using the bus and communicate with each other; and
the processor is configured to invoke executable program code stored in the memory, to perform some or all of the steps described in any method according to the second aspect of embodiments of the present invention.

According to a seventh aspect, an embodiment of the present invention provides a computer readable storage medium, where the computer readable storage medium stores program code. The program code includes an instruction for performing some or all of the steps described in any method according to the first aspect of embodiments of the present invention.

According to an eighth aspect, an embodiment of the present invention provides a computer readable storage medium, where the computer readable storage medium stores program code. The program code includes an instruction for performing some or all of the steps described in any method according to the second aspect of embodiments of the present invention.

In the fifth aspect to the eighth aspect, the sending unit may be the transmitter, the receiving unit may be the receiver, the processing unit may be the processor, and the obtaining unit may be the processor, or may be the processor and the receiver.

With reference to any one of the foregoing aspects, in some possible implementations, the configuration parameter set includes a cyclic shift sequence, an orthogonal cover code group, and a frequency-domain comb, and a specific implementation in which the network device receives, based on the configuration parameter set, the demodulation reference signal sent by the terminal device may be:

determining, by the network device based on the cyclic shift sequence and the orthogonal cover code group in the configuration parameter set, a cyclic shift and an orthogonal cover code used by at least one layer of the terminal device, where the cyclic shift sequence includes four cyclic shifts; in the four cyclic shifts, the first cyclic shift corresponds to the first layer, the second cyclic shift corresponds to the second layer, the third cyclic shift corresponds to the third layer, and the fourth cyclic shift corresponds to the fourth layer; and

receiving, by the network device based on the determined cyclic shift and orthogonal cover code that are used by the at least one layer and the frequency-domain comb, a demodulation reference signal corresponding to the at least one layer.

With reference to any one of the foregoing aspects, in some possible implementations, the foregoing orthogonal cover code combination includes four orthogonal cover codes, where in the orthogonal cover code combination, the first orthogonal cover code corresponds to the first layer, the second orthogonal cover code corresponds to the second layer, the third orthogonal cover code corresponds to the third layer, and the fourth orthogonal cover code corresponds to the fourth layer.

It can be learned that, in the embodiments of the present invention, the network device sends the configuration parameter indication information of the demodulation reference signal to the terminal device; and after receiving the configuration parameter indication information, the terminal device determines, based on the preset first demodulation reference signal mapping relationship set, the configuration parameter set corresponding to the index in the configuration parameter indication information, and sends the demodulation reference signal to the network device based on the configuration parameter set. Correspondingly, the network device receives the demodulation reference signal based on the configuration parameter set. The configuration parameter set includes the frequency-domain comb, and the frequency-domain comb can indicate a location of the demodulation reference signal in a preset frequency domain resource. In addition, the configuration parameter set including the frequency-domain comb and the orthogonal cover code allows the network device to support an application scenario in which more than two paired terminal devices having various layers perform MU-MIMO transmission and scheduling bandwidths of the paired terminal devices partially overlap.

## BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show some embodiments of the present invention, and a person of ordinary skill in the art may still derive other drawings from these accompanying drawings without creative efforts.

FIG. 1 is a schematic diagram of a resource block RB in a radio communications system disclosed in a prior-art solution;

FIG. 2 is a schematic diagram of partially overlapping and completely overlapping scheduling bandwidths disclosed in a prior-art solution;

FIG. 3 is a schematic diagram of comb-like distribution of subcarriers of a demodulation reference signal within a sending bandwidth in a prior-art solution;

FIG. 4 is a diagram of a system architecture of an example communications system according to an embodiment of the present invention;

FIG. 5 is a schematic flowchart of a demodulation reference signal transmission method according to an embodiment of the present invention;

FIG. 6 is a block diagram of functional units of a network device according to an embodiment of the present invention;

FIG. 7 is a block diagram of functional units of a terminal device according to an embodiment of the present invention;
FIG. 8 is a schematic structural diagram of a network device according to an embodiment of the present invention; and
FIG. 9 is a schematic structural diagram of a terminal device according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

For a better understanding of the technical solutions of the present invention, the following first briefly describes a case of parameter configuration of a DMRS (De Modulation Reference Signal, demodulation reference signal) in the prior art. Currently, in uplink-related downlink control information (Downlink Control Information, DCI), an index having 3-bit information for UE (User Equipment, user equipment) is supported, to determine a CS (Cyclic Shift, cyclic shift) and an OCC (Orthogonal Cover Code, orthogonal cover code) of a DMRS used by the UE. A mapping relationship between the 3-bit index and a configuration parameter set including a CS and an OCC is shown in Table 1. The UE determines the CS and the OCC of the DMRS based on signaling indicated by a base station, where $\lambda = 0,1,2,3$ indicates different layers, $[w^{(\lambda)}(0)\ w^{(\lambda)}(1)]$ indicates an OCC, and $n_{\mathrm{DMRS},\lambda}^{(2)}$ indicates a CS.

The table is applicable to indication of a DMRS of UE in SU (Single User, single-user), or MU (Multiple User, multiple-user) with completely overlapping bandwidths, or MU (Multiple User, multiple-user) with partially overlapping bandwidths. Specifically: (1) For transmission at the first layer to the fourth layer in the SU, a DMRS index indicated for the UE may be any one of 000 to 111, and it only needs to be ensured that DMRSs at different layers of the UE are orthogonal to each other. Orthogonality between different layers of any index in 000 to 111 may be achieved by using a CS. (2) For the MU with completely overlapping bandwidths, orthogonality between DMRSs of different multiplexing UEs may be achieved by using a CS, or may be achieved by using a CS and an OCC. For example, {000, 011, 100} may be allocated to three multiplexing UEs, and each multiplexing UE uses two layers. In this case, DMRSs corresponding to {000, 011, 100} have same OCCs at the first layer and the second layer, and orthogonality between the DMRSs is achieved by using respective different CSs. For another example, {000, 001, 011, 100, 101, 110} may be allocated to three multiplexing UEs, and each multiplexing UE uses two layers. Orthogonality between DMRSs corresponding to {000, 001, 011, 100, 101, 110} is achieved by using same OCCs and different CSs at the first layer and the second layer, or is achieved by using different OCCs. For MU with more than two layers, for example, multiplexing UEs using four layers, orthogonality between DMRSs of the different multiplexing UEs may be achieved by using an OCC, for example, by allocating {011, 110} to two multiplexing UEs; or may be achieved by using a CS and an OCC, for example, by allocating {000, 001} to two multiplexing UEs. (3) For the MU with partially overlapping bandwidths, orthogonality between DMRSs of different multiplexing UEs can be achieved only by using an OCC. Because a length of the OCC is 2, only two users are supported for multiplexing. For multiplexing UEs using two layers, it needs to be ensured that DMRSs that can be allocated to the multiplexing UEs use different OCCs at the first layer and the second layer. Such combinations include {000, 001}, {000, 010}, {010, 011}, and the like. For multiplexing UEs using four layers, it needs to be ensured that DMRSs that can be allocated to the multiplexing UEs use different OCCs at all of the first layer to the fourth layer. Such combinations include {011, 101}, {011, 110}, {100, 101}, and {100, 110}.

**Table 1**

| Index | $n_{\mathrm{DMRS},\lambda}^{(2)}$ | | | | $[w^{(\lambda)}(0)\ w^{(\lambda)}(1)]$ | | | |
| | $\lambda = 0$ | $\lambda = 1$ | $\lambda = 2$ | $\lambda = 3$ | $\lambda = 0$ | $\lambda = 1$ | $\lambda = 2$ | $\lambda = 3$ |
|---|---|---|---|---|---|---|---|---|
| 000 | 0 | 6 | 3 | 9 | [1 1] | [1 1] | [1 -1] | [1 -1] |
| 001 | 6 | 0 | 9 | 3 | [1 -1] | [1 -1] | [1 1] | [1 1] |
| 010 | 3 | 9 | 6 | 0 | [1 -1] | [1 -1] | [1 1] | [1 1] |
| 011 | 4 | 10 | 7 | 1 | [1 1] | [1 1] | [1 1] | [1 1] |
| 100 | 2 | 8 | 5 | 11 | [1 1] | [1 1] | [1 1] | [1 1] |
| 101 | 8 | 2 | 11 | 5 | [1 -1] | [1 -1] | [1 -1] | [1 -1] |
| 110 | 10 | 4 | 1 | 7 | [1 -1] | [1 -1] | [1 -1] | [1 -1] |

(continued)

| Index | $n^{(2)}_{\mathrm{DMRS},\lambda}$ | | | | $[w^{(\lambda)}(0)\ w^{(\lambda)}(1)]$ | | | |
|---|---|---|---|---|---|---|---|---|
| | $\lambda = 0$ | $\lambda = 1$ | $\lambda = 2$ | $\lambda = 3$ | $\lambda = 0$ | $\lambda = 1$ | $\lambda = 2$ | $\lambda = 3$ |
| 111 | 9 | 3 | 0 | 6 | [1 1] | [1 1] | [1 -1] | [1 -1] |

It can be learned through further observation of Table 1 that, for any one of DRMSs whose indexes are 000, 001, 010, and 111, OCCs of the DRMS at the first layer and the second layer are different from OCCs at the third layer and the fourth layer. When the MU with partially overlapping bandwidths is supported, if a quantity of layers of multiplexing UE is less than or equal to 2, only two DMRSs having different OCCs at the first layer and the second layer need to be selected from 000, 001, 010, and 111. However, if a quantity of layers of multiplexing UE is greater than 2, DMRSs of different multiplexing UEs have a same OCC, and orthogonality cannot be ensured. Therefore, 000, 001, 010, and 111 can support only MU with partially overlapping bandwidths in which a quantity of layers of multiplexing UE is less than or equal to 2. For any one of DRMSs whose indexes are 011, 100, 101, and 110, OCCs of the DRMS at the first layer to the fourth layer are the same. When the MU with partially overlapping bandwidths is supported, if a quantity of layers of multiplexing UE is less than or equal to 2, only two DMRSs having different OCCs at the first layer and the second layer need to be selected from 011, 100, 101, and 110. If a quantity of layers of multiplexing UE is greater than 2, it is only required to select two DMRSs having different OCCs at the first layer to the fourth layer from 011, 100, 101, and 110. Therefore, 011, 100, 101, and 110 can support MU with partially overlapping bandwidths in which a quantity of layers of multiplexing UE is less than or equal to 2 or is greater than 2.

It can be learned that, a DMRS mapping relationship set shown in Table 1 can well support orthogonality between DMRSs in an original non-IFDM (Interleaved Frequency Division Multiple, interleaved frequency division multiplexing) manner, and can maintain backward compatibility.

For IFDM DMRSs, in addition to a CS and an OCC, orthogonality between different DMRSs may be achieved by using a frequency-domain comb. For MU-MIMO transmission with partially overlapping bandwidths that needs to support more than two multiplexing UEs, IFDM DMRSs need to be used, and a first demodulation reference signal mapping relationship set is required to indicate DMRSs of the multiplexing UEs in this scenario. Because the first demodulation reference signal mapping relationship set is applicable to the MU-MIMO transmission with partially overlapping bandwidths for more than two multiplexing UEs, orthogonality between DMRSs of different multiplexing UEs is achieved only by using an OCC and a comb. Orthogonality between DMRSs at different layers of same UE is achieved by using a CS and/or an OCC.

For the foregoing characteristics in Table 1, a mapping relationship that is between a frequency-domain comb, a CS, and an OCC and that is in the first demodulation reference signal mapping relationship set may be determined according to the following design principle: (1) In DMRSs whose OCCs at the first layer and the second layer different from OCCs at the third layer and the fourth layer, sequence numbers of the DMRSs include {000, 001, 010, 111}, and DMRSs whose OCCs at the first layer and the second layer are the same use different combs. (2) In DMRSs whose OCCs at the first layer to the fourth layer are the same, sequence numbers of the DMRSs include {011, 100, 101, 110}, and to better support UEs having more than two layers for multiplexing, the DMRSs whose OCCs at the first layer to the fourth layer are the same use different combs. For example, in Table 1, different combs are set for 011 and 100, and different combs are set for 101 and 110.

The foregoing design principle may also be summarized as follows: (1) In DMRSs having different indexes, DMRSs whose OCCs corresponding to the first layer to the fourth layer are respectively the same are mapped to different combs. (2) Because a case in which OCCs corresponding to the first layer to the fourth layer are respectively the same does not occur between indexes belonging to two index sets, the foregoing comb mapping method is actually performed independently in two DMRS sets, where the two DMRS sets include {011, 100, 101, 110} and {000, 001, 010, 111}.

With reference to the foregoing analysis, specifically, the embodiments of the present invention provide a demodulation reference signal transmission method and a related device. FIG. 4 is a diagram of a system architecture of an example communications system according to an embodiment of the present invention, including a network device, a core network device, and a terminal device. The example communications system may be, for example, an existing Long Term Evolution (Long Term Evolution, LTE) communications system, or may be a future communications system using a 5th Generation network (5th Generation, 5G) new radio (New Air Interfaces, NR) technology. Using an LTE communications system as an example, the core network device may include, for example, a mobility management entity (Mobility Management Entity, MME) or a serving gateway (Serving GateWay, S-GW). The MME is mainly responsible for signaling processing, that is, control plane functions including access control, mobility management, attach and detach, a session management function, and gateway selection. The S-GW is mainly responsible for a user plane function of user data forwarding, that is, performing data packet routing and forwarding under control of the MME. The network device may be, for example, an LTE base station, namely, an evolved NodeB (Evolved Node B, eNode B), or may be a base station in a future 5G network. The network device is mainly responsible for at least one of functions such as radio resource management, quality of service (Quality of Service, QoS) management, and data compression and encryption on an air interface side. On a core network side, the eNode B is mainly responsible for forwarding control plane signaling to the MME and forwarding user plane service data to the S-GW. The terminal device may include, for example, a handheld device having a wireless communication function, an in-vehicle device, a wearable device, a computing device, another processing device connected to a wireless modem, a mobile station (Mobile Station, MS for short), and user equipment (User Equipment), which are, for ease of description, briefly referred to as a terminal device in this application.

The following describes the embodiments of the present invention in detail with reference to the accompanying drawings, to help a person skilled in the art have a better understanding.

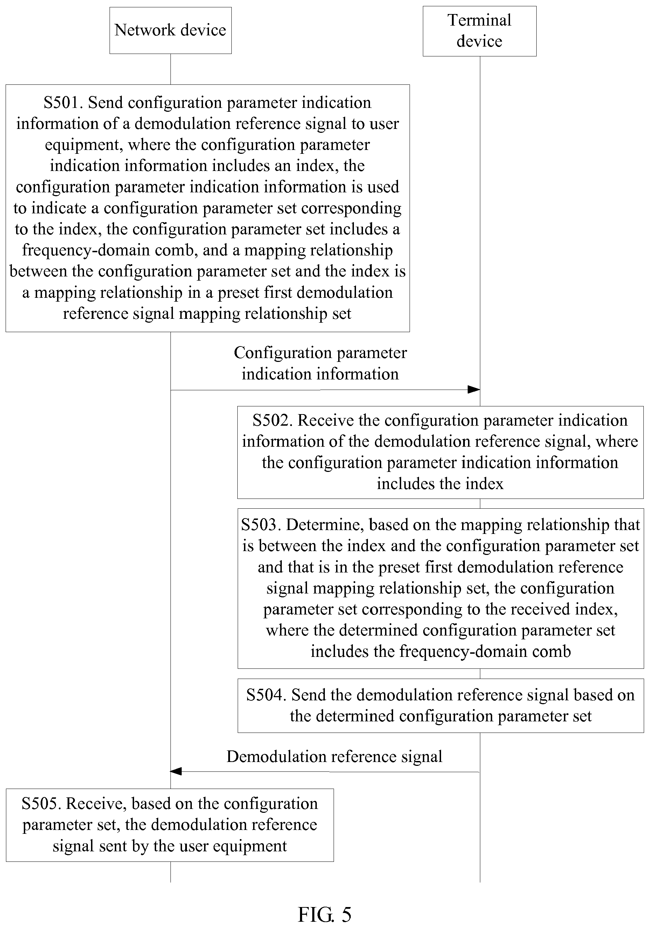

FIG. 5 is a schematic flowchart of a demodulation reference signal transmission method according to an embodiment of the present invention. The method is described from perspectives of a network device and a terminal device. As shown in FIG. 5, the demodulation reference signal transmission method includes the following steps:

S501. The network device sends configuration parameter indication information of a demodulation reference signal to the terminal device, where the configuration parameter indication information includes an index, the configuration parameter indication information is used to indicate a configuration parameter set corresponding to the index, the configuration parameter set includes a frequency-domain comb, and a mapping relationship between the configuration parameter set and the index is a mapping relationship in a preset first demodulation reference signal mapping relationship set.

S502. The terminal device receives the configuration parameter indication information of the demodulation reference signal, where the configuration parameter indication information includes the index.

S503. The terminal device determines, based on the mapping relationship that is between the index and the configuration parameter set and that is in the preset first demodulation reference signal mapping relationship set, the configuration parameter set corresponding to the received index, where the determined configuration parameter set includes the frequency-domain comb.

S504. The terminal device sends the demodulation reference signal based on the determined configuration parameter set.

S505. The network device receives, based on the configuration parameter set, the demodulation reference signal sent by the terminal device.

The configuration parameter set includes a cyclic shift sequence, an orthogonal cover code group, and a frequency-domain comb, and a specific implementation in which the network device receives, based on the configuration parameter set, the demodulation reference signal sent by the terminal device may be:

determining, by the network device based on the cyclic shift sequence and the orthogonal cover code group in the configuration parameter set, a cyclic shift and an orthogonal cover code used by at least one layer of the terminal device, where the cyclic shift sequence includes four cyclic shifts; in the four cyclic shifts, the first cyclic shift corresponds to the first layer, the second cyclic shift corresponds to the second layer, the third cyclic shift corresponds to the third layer, and the fourth cyclic shift corresponds to the fourth layer; and

receiving, by the network device based on the determined cyclic shift and orthogonal cover code that are used by the at least one layer and the frequency-domain comb, a demodulation reference signal corresponding to the at least one layer.

It can be learned that, in this embodiment of the present invention, the network device sends the configuration parameter indication information of the demodulation reference signal to the terminal device; and after receiving the configuration parameter indication information, the terminal device determines, based on the preset first demodulation reference signal mapping relationship set, the configuration parameter set corresponding to the index in the configuration parameter indication information, and sends the demodulation reference signal to the network device based on the configuration parameter set. Correspondingly, the network device receives the demodulation reference signal based on the configuration parameter set. The configuration parameter set includes the frequency-domain comb, and the frequency-domain comb can indicate a location of the demodulation reference signal in a preset frequency domain resource. In addition, the configuration parameter set including the frequency-domain comb and the orthogonal cover code allows the network device to support an application scenario in which more than two paired terminal devices having various layers perform MU-MIMO transmission and scheduling bandwidths of the paired terminal devices partially overlap.

Optionally, in this embodiment of the present invention, before the network device sends the configuration parameter indication information of the demodulation reference signal to the terminal device, the network device further performs the following operation:

sending, by the network device, demodulation reference signal mapping relationship set indication information, where the demodulation reference signal mapping relationship set indication information is used to indicate the first demodulation reference signal mapping relationship set in at least two preset demodulation reference signal mapping relationship sets.

Optionally, in this embodiment of the present invention, before the terminal device receives the configuration parameter indication information of the demodulation reference signal, the terminal device further performs the following operation:

receiving, by the terminal device, the demodulation reference signal mapping relationship set indication information, where the demodulation reference signal mapping relationship set indication information is used to indicate the first demodulation reference signal mapping relationship set in the at least two preset demodulation reference signal mapping relationship sets.

It can be learned that, in an optional embodiment of the present invention, the network device can instruct, by sending the demodulation reference signal mapping relationship set indication information to the terminal device, the terminal device to use the first demodulation reference signal mapping relationship set in the at least two preset demodulation reference signal mapping relationship sets in the following demodulation reference signal sending task. An application scenario in which more than two paired terminal devices having various layers perform MU-MIMO transmission and scheduling bandwidths of the paired terminal devices partially overlap can be supported.

Optionally, in this embodiment of the present invention, the configuration parameter set further includes at least one of a cyclic shift sequence and an orthogonal cover code combination, the first demodulation reference signal mapping relationship set includes at least two indexes, and the at least two indexes include a first index and a second index.

If four orthogonal cover codes in a first orthogonal cover code combination corresponding to the first index are respectively the same as four orthogonal cover codes in a second orthogonal cover code combination corresponding to the second index, a first frequency-domain comb corresponding to the first index is different from a second frequency-domain comb corresponding to the second index; or

if a first frequency-domain comb corresponding to the first index is the same as a second frequency-domain comb corresponding to the second index, four orthogonal cover codes in a first orthogonal cover code combination corresponding to the first index are respectively different from four orthogonal cover codes in a second orthogonal cover code combination corresponding to the second index.

Optionally, in this embodiment of the present invention, the configuration parameter set further includes at least one of a cyclic shift sequence and an orthogonal cover code combination, the first demodulation reference signal mapping relationship set includes at least two indexes, and the at least two indexes include a first index set and a second index set; in four orthogonal cover codes in an orthogonal cover code group corresponding to each index in the first index set, the first two orthogonal cover codes are the same, the second two orthogonal cover codes are the same, and the first two orthogonal cover codes are different from the second two orthogonal cover codes; four orthogonal cover codes in an orthogonal cover code group corresponding to each index in the second index set are the same.

The first index set includes at least a first index and a second index; and if the first two orthogonal cover codes in a first orthogonal cover code combination corresponding to the first index are respectively the same as the first two orthogonal cover codes in a second orthogonal cover code combination corresponding to the second index, a first frequency-domain comb corresponding to the first index is different from a second frequency-domain comb corresponding to the second index; or if a first frequency-domain comb corresponding to the first index is the same as a second frequency-domain comb corresponding to the second index, the first two orthogonal cover codes in a first orthogonal cover code combination corresponding to the first index are different from the first two orthogonal cover codes in a second orthogonal cover code combination corresponding to the second index; or

the second index set includes at least a third index and a fourth index; and if the first two orthogonal cover codes in a third orthogonal cover code combination corresponding to the third index are respectively the same as the first two orthogonal cover codes in a fourth orthogonal cover code combination corresponding to the fourth index, a third frequency-domain comb corresponding to the third index is different from a fourth frequency-domain comb corresponding to the fourth index; or if a third frequency-domain comb corresponding to the third index is the same as a fourth frequency-domain comb corresponding to the fourth index, four orthogonal cover codes in a third orthogonal cover code combination corresponding to the third index are different from four orthogonal cover codes in a fourth orthogonal cover code combination corresponding to the fourth index.

The foregoing orthogonal cover code combination includes four orthogonal cover codes. In the orthogonal cover code combination, the first orthogonal cover code corresponds to the first layer, for example, the first orthogonal cover code corresponding to the index 000 in Table 1 is [1 1]; the second orthogonal cover code corresponds to the second layer, for example, the second orthogonal cover code corresponding to the index 001 in Table 1 is [1 -1]; the third orthogonal cover code corresponds to the third layer, for example, the third orthogonal cover code corresponding to the index 000 in Table 1 is [1 -1]; and the fourth orthogonal cover code corresponds to the fourth layer, for example, the third orthogonal cover code corresponding to the index 000 in Table 1 is [1 -1].

It may be understood that, the foregoing first demodulation reference signal mapping relationship set may be in various forms. A specific form of the first demodulation reference signal mapping relationship set is not uniquely limited in this embodiment of the present invention.

In one embodiment, when a repetition factor RPF is equal to 2, the foregoing first demodulation reference signal mapping relationship set may be shown in Table 2.

The first demodulation reference signal mapping relationship set may be used to indicate MU-MIMO transmission of a maximum of four paired terminal devices having four layers, and scheduling bandwidths of the paired terminal devices partially overlap. For example, based on the foregoing first demodulation reference signal mapping relationship set shown in Table 2, the network device may separately send first configuration parameter indication information including an index 011 to a first paired terminal device, second configuration parameter indication information including an index 100 to a second paired terminal device, third configuration parameter indication information including an index 101 to a third paired terminal device, and fourth configuration parameter indication information including an index 110 to a fourth paired terminal device. Specifically, orthogonality between the first paired terminal device and the second paired terminal device may be achieved by using a frequency-domain comb, orthogonality between the first paired terminal device and the third paired terminal device may be achieved by using an orthogonal cover code, orthogonality between the first paired terminal device and the fourth paired terminal device may be achieved by using a frequency-domain comb and/or an orthogonal cover code, orthogonality between the second paired terminal device and the third paired terminal device may be achieved by using a frequency-domain comb and/or an orthogonal cover code, orthogonality between the second paired terminal device and the fourth paired terminal device may be achieved by using an orthogonal cover code, and orthogonality between the third paired terminal device and the fourth paired terminal device may be achieved by using a frequency-domain comb.

**Table 2**

| Index | $n_{\mathrm{DMRS},\lambda}^{(2)}$ | | | | $[w^{(\lambda)}(0)\ w^{(\lambda)}(1)]$ | | | | Frequency-domain comb |
|---|---|---|---|---|---|---|---|---|---|
| | $\lambda = 0$ | $\lambda = 1$ | $\lambda = 2$ | $\lambda = 3$ | $\lambda = 0$ | $\lambda = 1$ | $\lambda = 2$ | $\lambda = 3$ | |
| 000 | 0 | 4 | 2 | 5 | [1 1] | [1 1] | [1 -1] | [1 -1] | 0 |
| 001 | 4 | 0 | 5 | 2 | [1 -1] | [1 -1] | [1 1] | [1 1] | 0 |
| 010 | 2 | 5 | 4 | 0 | [1 -1] | [1 -1] | [1 1] | [1 1] | 1 |
| **011** | 3 | 0 | 5 | 1 | [1 1] | [1 1] | [1 1] | [1 1] | 0 |
| **100** | 0 | 4 | 2 | 5 | [1 1] | [1 1] | [1 1] | [1 1] | 1 |
| **101** | 4 | 0 | 5 | 2 | [1 -1] | [1 -1] | [1 -1] | [1 -1] | 0 |
| **110** | 0 | 3 | 1 | 5 | [1 -1] | [1 -1] | [1 -1] | [1 -1] | 1 |
| 111 | 5 | 2 | 0 | 4 | [1 1] | [1 1] | [1 -1] | [1 -1] | 1 |

In one aspect, in the first demodulation reference signal mapping relationship set shown in Table 2, if four orthogonal cover codes in a first orthogonal cover code combination corresponding to the first index are respectively the same as four orthogonal cover codes in a second orthogonal cover code combination corresponding to the second index, a first frequency-domain comb corresponding to the first index is different from a second frequency-domain comb corresponding to the second index. For example, the first index is 001, and the second index is 010. Alternatively, if a first frequency-domain comb corresponding to the first index is the same as a second frequency-domain comb corresponding to the second index, four orthogonal cover codes in a first orthogonal cover code combination corresponding to the first index are respectively different from four orthogonal cover codes in a second orthogonal cover code combination corresponding to the second index. For example, the first index is 011, and the second index is 101.

In another aspect, in the first demodulation reference signal mapping relationship set shown in Table 2, the first index set may be {000, 001, 010, 111}, and the second index set may be {011, 100, 101, 110}.

In the first index set {000, 001, 010, 111}, if the first two orthogonal cover codes in a first orthogonal cover code combination corresponding to the first index are respectively the same as the first two orthogonal cover codes in a second orthogonal cover code combination corresponding to the second index, a first frequency-domain comb corresponding to the first index is different from a second frequency-domain comb corresponding to the second index. For example, the first index is 000, and the second index is 111. Alternatively, if a first frequency-domain comb corresponding to the first index is the same as a second frequency-domain comb corresponding to the second index, the first two orthogonal cover codes in a first orthogonal cover code combination corresponding to the first index are different from the first two orthogonal cover codes in a second orthogonal cover code combination corresponding to the second index.

For example, the first index is 000, and the second index is 001.

Alternatively, in the second index set {011, 100, 101, 110}, if the first two orthogonal cover codes in a third orthogonal cover code combination corresponding to the third index are respectively the same as the first two orthogonal cover codes in a fourth orthogonal cover code combination corresponding to the fourth index, a third frequency-domain comb corresponding to the third index is different from a fourth frequency-domain comb corresponding to the fourth index. For example, the third index is 011, and the fourth index is 100. Alternatively, if a third frequency-domain comb corresponding to the third index is the same as a fourth frequency-domain comb corresponding to the fourth index, four orthogonal cover codes in a third orthogonal cover code combination corresponding to the third index are different from four orthogonal cover codes in a fourth orthogonal cover code combination corresponding to the fourth index. For example, the third index is 011, and the fourth index is 101.

In another embodiment, cyclic shifts of an existing demodulation reference signal include 0 to 11, a total of 12 cyclic shifts; when an interleaved frequency division multiplexing IFDM manner is used for the demodulation reference signal, a time-domain signal corresponding to a frequency-domain sequence with an RPF of 2 is a repeated sequence of a half-length sequence. Therefore, a quantity of available cyclic shifts decreases to 6. Therefore, a value of the cyclic shift in Table 2 ranges from 0 to 5, and cyclic shifts of different layers of each demodulation reference signal keep orthogonal. A cyclic shift determining method is not unique, and a general principle is ensuring a sufficient interval between cyclic shifts of the first layer and the second layer. As shown in FIG. 3, another direct method is dividing values of cyclic shifts in Table 2 by 2 and rounding down resulting values, to obtain cyclic shifts in Table 3. As shown in the following Table 3:

**Table 3**

| Index | $n_{\mathrm{DMRS},\lambda}^{(2)}$ | | | | $[w^{(\lambda)}(0)\ w^{(\lambda)}(1)]$ | | | | Frequency-domain comb |
|---|---|---|---|---|---|---|---|---|---|
| | $\lambda = 0$ | $\lambda = 1$ | $\lambda = 2$ | $\lambda = 3$ | $\lambda = 0$ | $\lambda = 1$ | $\lambda = 2$ | $\lambda = 3$ | |
| 000 | 0 | 3 | 1 | 4 | [1 1] | [1 1] | [1 -1] | [1 -1] | 0 |
| 001 | 3 | 0 | 4 | 1 | [1 -1] | [1 -1] | [1 1] | [1 1] | 0 |
| 010 | 1 | 4 | 3 | 0 | [1 -1] | [1 -1] | [1 1] | [1 1] | 1 |
| **011** | 2 | 5 | 3 | 0 | [1 1] | [1 1] | [1 1] | [1 1] | 0 |
| **100** | 1 | 4 | 2 | 5 | [1 1] | [1 1] | [1 1] | [1 1] | 1 |
| **101** | 4 | 1 | 5 | 2 | [1 -1] | [1 -1] | [1 -1] | [1 -1] | 0 |
| **110** | 5 | 2 | 0 | 3 | [1 -1] | [1 -1] | [1 -1] | [1 -1] | 1 |
| 111 | 4 | 1 | 0 | 3 | [1 1] | [1 1] | [1 -1] | [1 -1] | 1 |

In still another embodiment, alternatively, the first demodulation reference signal mapping relationship set may be further reduced to four indexes, and only 011, 100, 101, and 110 are reserved. In other words, both a terminal device having two layers or fewer and a terminal device having more than two layers can be supported for multiplexing. In this case, only 2 bits are required to represent an index, as shown in the following Table 4:

**Table 4**

| Index | $n_{\mathrm{DMRS},\lambda}^{(2)}$ | | | | $[w^{(\lambda)}(0)\ w^{(\lambda)}(1)]$ | | | | Frequency-domain comb |
|---|---|---|---|---|---|---|---|---|---|
| | $\lambda = 0$ | $\lambda = 1$ | $\lambda = 2$ | $\lambda = 3$ | $\lambda = 0$ | $\lambda = 1$ | $\lambda = 2$ | $\lambda = 3$ | |
| 00 | 2 | 5 | 3 | 0 | [1 1] | [1 1] | [1 1] | [1 1] | 0 |
| 01 | 1 | 4 | 2 | 5 | [1 1] | [1 1] | [1 1] | [1 1] | 1 |
| 10 | 4 | 1 | 5 | 2 | [1 -1] | [1 -1] | [1 -1] | [1 -1] | 0 |
| 11 | 5 | 2 | 0 | 3 | [1 -1] | [1 -1] | [1 -1] | [1 -1] | 1 |

In still another embodiment, when an RPF is equal to 4, a value of a frequency-domain comb is 0, 1, 2, or 3. Similar to Table 4, only index combinations in which same orthogonal cover codes are used at the first layer to the fourth layer are reserved. In addition, a quantity of available cyclic shifts corresponding to the RPF of 4 may decrease to 3. Details are described in an example first demodulation reference signal mapping relationship set shown in the following Table 5:

**Table 5**

| Index | $n_{\text{DMRS},\lambda}^{(2)}$ | | | | $[w^{(\lambda)}(0)\ w^{(\lambda)}(1)]$ | | | | Frequency-domain comb |
|-------|-------|-------|-------|-------|-------|-------|-------|-------|-------|
| | $\lambda = 0$ | $\lambda = 1$ | $\lambda = 2$ | $\lambda = 3$ | $\lambda = 0$ | $\lambda = 1$ | $\lambda = 2$ | $\lambda = 3$ | |
| 000 | 0 | 2 | 1 | X | [1 1] | [1 1] | [1 1] | [1 1] | 0 |
| 001 | 2 | 0 | 1 | X | [1 1] | [1 1] | [1 1] | [1 1] | 1 |
| 010 | 0 | 2 | 1 | X | [1 -1] | [1 -1] | [1 -1] | [1 -1] | 0 |
| 011 | 2 | 0 | 1 | X | [1 -1] | [1 -1] | [1 -1] | [1 -1] | 1 |
| 100 | 0 | 2 | 1 | X | [1 1] | [1 1] | [1 1] | [1 1] | 2 |
| 101 | 2 | 0 | 1 | X | [1 1] | [1 1] | [1 1] | [1 1] | 3 |
| 110 | 0 | 2 | 1 | X | [1 -1] | [1 -1] | [1 -1] | [1 -1] | 2 |
| 111 | 2 | 0 | 1 | X | [1 -1] | [1 -1] | [1 -1] | [1 -1] | 3 |

Optionally, in this embodiment of the present invention, the at least two demodulation reference signal mapping relationship sets further include a second demodulation reference signal mapping relationship set, and a configuration parameter set corresponding to an index in the second demodulation reference signal mapping relationship set does not include a frequency-domain comb.

The second demodulation reference signal mapping relationship set may be, for example, the mapping relationship set shown in the foregoing Table 1. As can be learned from the foregoing analysis, the second demodulation reference signal mapping relationship set is applicable to indication of a demodulation reference signal of a terminal device in SU, or MU with completely overlapping bandwidths, or MU with partially overlapping bandwidths and with two terminal devices or fewer.

Optionally, in this embodiment of the present invention, the demodulation reference signal mapping relationship set indication information that is used to indicate the first demodulation reference signal mapping relationship set is sent when the network device determines a first condition, and the first condition is:

a manner in which the network device schedules the terminal device is a multiple-user multi-input multi-output MU-MIMO manner, and bandwidths scheduled by the network device for MU-MIMO paired terminal devices partially overlap, where a quantity of the MU-MIMO paired terminal devices is greater than 2.

Optionally, in this embodiment of the present invention, the network device further performs the following operation:

when determining a second condition, sending, by the network device, demodulation reference signal mapping relationship set indication information that is used to indicate the second demodulation reference signal mapping relationship set, where the second condition is:

a manner in which the network device schedules the terminal device is a single-user SU manner; or
a manner in which the network device schedules the terminal device is an MU-MIMO manner, and bandwidths scheduled by the network device for MU-MIMO paired terminal devices completely overlap; or
a manner in which the network device schedules the terminal device is an MU-MIMO manner, and bandwidths scheduled by the network device for MU-MIMO paired terminal devices partially overlap, where a quantity of the MU-MIMO paired terminal devices is less than or equal to 2.

Optionally, in this embodiment of the present invention, a sending manner of the demodulation reference signal mapping relationship set indication information includes either of the following manners:
sending by using DCI (Downlink Control Information, downlink control information) related to uplink scheduling; and sending by using RRC (Radio Resource Control, radio resource control) signaling.

Optionally, in this embodiment of the present invention, a receiving manner of the demodulation reference signal mapping relationship set indication information includes either of the following manners:
receiving by using DCI related to uplink scheduling; and receiving by using RRC signaling.

During specific implementation, the network device may send the demodulation reference signal mapping relationship set indication information to the terminal device by using the DCI related to uplink scheduling; or the network device may send the demodulation reference signal mapping relationship set indication information to the terminal device by using the RRC signaling.

The following describes an apparatus for implementing the foregoing method in the embodiments of the present invention with reference to the accompanying drawings.

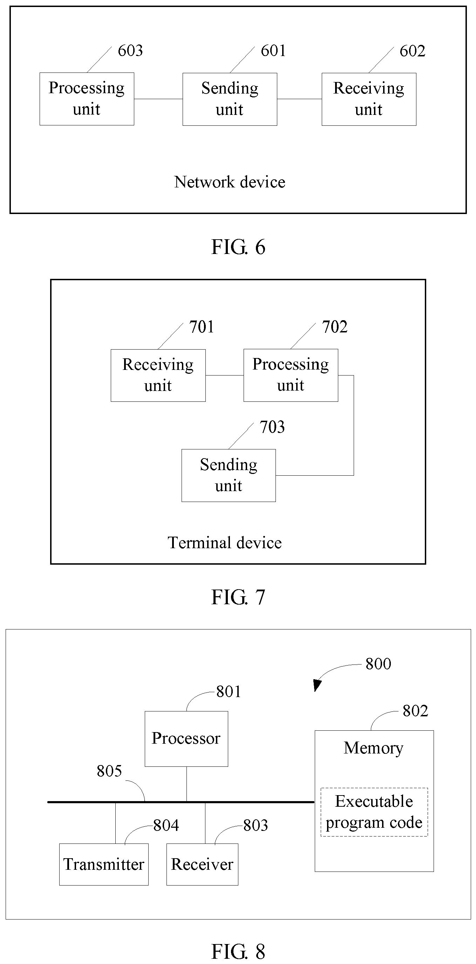

FIG. 6 is a block diagram of functional units of a network device according to an embodiment of the present invention.

As shown in FIG. 6, the network device 600 may include a sending unit 601 and a receiving unit 602.

The sending unit 601 is configured to send configuration parameter indication information of a demodulation reference signal, where the configuration parameter indication information includes an index, the configuration parameter indication information is used to indicate a configuration parameter set corresponding to the index, the configuration parameter set includes a frequency-domain comb, and a mapping relationship between the configuration parameter set and the index is a mapping relationship in a preset first demodulation reference signal mapping relationship set.

The receiving unit 602 is configured to receive, based on the configuration parameter set, the demodulation reference signal sent by the terminal device.

Optionally, the sending unit 601 is further configured to: before sending the configuration parameter indication information of the demodulation reference signal, send demodulation reference signal mapping relationship set indication information, where the demodulation reference signal mapping relationship set indication information is used to indicate the first demodulation reference signal mapping relationship set in at least two preset demodulation reference signal mapping relationship sets.

Optionally, the configuration parameter set further includes at least one of a cyclic shift sequence and an orthogonal cover code combination, the first demodulation reference signal mapping relationship set includes at least two indexes, and the at least two indexes include a first index and a second index.

If four orthogonal cover codes in a first orthogonal cover code combination corresponding to the first index are respectively the same as four orthogonal cover codes in a second orthogonal cover code combination corresponding to the second index, a first frequency-domain comb corresponding to the first index is different from a second frequency-domain comb corresponding to the second index; or

if a first frequency-domain comb corresponding to the first index is the same as a second frequency-domain comb corresponding to the second index, four orthogonal cover codes in a first orthogonal cover code combination corresponding to the first index are respectively different from four orthogonal cover codes in a second orthogonal cover code combination corresponding to the second index.

Optionally, the configuration parameter set further includes at least one of a cyclic shift sequence and an orthogonal cover code combination, the first demodulation reference signal mapping relationship set includes at least two indexes, and the at least two indexes include a first index set and a second index set; in four orthogonal cover codes in an orthogonal cover code group corresponding to each index in the first index set, the first two orthogonal cover codes are the same, the second two orthogonal cover codes are the same, and the first two orthogonal cover codes are different from the second two orthogonal cover codes; four orthogonal cover codes in an orthogonal cover code group corresponding to each index in the second index set are the same.

The first index set includes at least a first index and a second index; and if the first two orthogonal cover codes in a first orthogonal cover code combination corresponding to the first index are respectively the same as the first two orthogonal cover codes in a second orthogonal cover code combination corresponding to the second index, a first frequency-domain comb corresponding to the first index is different from a second frequency-domain comb corresponding to the second index; or if a first frequency-domain comb corresponding to the first index is the same as a second frequency-domain comb corresponding to the second index, the first two orthogonal cover codes in a first orthogonal cover code combination corresponding to the first index are different from the first two orthogonal cover codes in a second orthogonal cover code combination corresponding to the second index; or

the second index set includes at least a third index and a fourth index; and if the first two orthogonal cover codes in a third orthogonal cover code combination corresponding to the third index are respectively the same as the first two orthogonal cover codes in a fourth orthogonal cover code combination corresponding to the fourth index, a third frequency-domain comb corresponding to the third index is different from a fourth frequency-domain comb corresponding to the fourth index; or if a third frequency-domain comb corresponding to the third index is the same as a fourth frequency-domain comb corresponding to the fourth index, four orthogonal cover codes in a third orthogonal cover code combination corresponding to the third index are different from four orthogonal cover codes in a fourth orthogonal cover code combination corresponding to the fourth index.

Optionally, the at least two demodulation reference signal mapping relationship sets further include a second demodulation reference signal mapping relationship set, and a configuration parameter set corresponding to an index in the second demodulation reference signal mapping relationship set does not include a frequency-domain comb.

Optionally, the demodulation reference signal mapping relationship set indication information that is used to indicate the first demodulation reference signal mapping relationship set is sent when the network device determines a first condition, and the first condition is:

a manner in which the network device schedules the terminal device is a multiple-user multi-input multi-output MU-MIMO manner, and bandwidths scheduled by the network device for MU-MIMO paired terminal devices partially overlap, where a quantity of the MU-MIMO paired terminal devices is greater than 2.

Optionally, the network device further includes:

a processing unit 603, configured to: when determining a second condition, send, by using the sending unit, demodulation reference signal mapping relationship set indication information that is used to indicate the second demodulation reference signal mapping relationship set, where the second condition is:

a manner in which the network device schedules the terminal device is a single-user SU manner; or
a manner in which the network device schedules the terminal device is an MU-MIMO manner, and bandwidths scheduled by the network device for MU-MIMO paired terminal devices completely overlap; or
a manner in which the network device schedules the terminal device is an MU-MIMO manner, and bandwidths scheduled by the network device for MU-MIMO paired terminal devices partially overlap, where a quantity of the MU-MIMO paired terminal devices is less than or equal to 2.

Optionally, a sending manner of the demodulation reference signal mapping relationship set indication information includes either of the following manners:

sending by using downlink control information DCI related to uplink scheduling; and
sending by using radio resource control RRC signaling.

It should be noted that, the foregoing units may be configured to perform related steps in the foregoing method embodiment. In this embodiment, the network device 600 is presented in a form of units. The "unit" herein may be an application-specific integrated circuit (application-specific integrated circuit, ASIC), a processor and a memory that are configured to execute one or more software or firmware programs, an integrated logic circuit, and/or another device capable of providing the foregoing functions. A person of ordinary skill in the art may know that a composition form of the network device 600 may be a network device shown in FIG. 8.

For example, functions of the foregoing sending unit 601 may be implemented by the network device shown in FIG. 8. Specifically, a processor 801 invokes executable program code in a memory 803, to send configuration parameter indication information of a demodulation reference signal by using an interface circuit 802.

It can be learned that, in this embodiment of the present invention, the network device sends the configuration parameter indication information of the demodulation reference signal to the terminal device; and after receiving the configuration parameter indication information, the terminal device determines, based on the preset first demodulation reference signal mapping relationship set, the configuration parameter set corresponding to the index in the configuration parameter indication information, and sends the demodulation reference signal to the network device based on the configuration parameter set. Correspondingly, the network device receives the demodulation reference signal based on the configuration parameter set. The configuration parameter set includes the frequency-domain comb, and the frequency-domain comb can indicate a location of the demodulation reference signal in a preset frequency domain resource. In addition, the configuration parameter set including the frequency-domain comb and the orthogonal cover code allows the network device to support an application scenario in which more than two paired terminal devices having various layers perform MU-MIMO transmission and scheduling bandwidths of the paired terminal devices partially overlap.

FIG. 7 is a block diagram of functional units of a terminal device according to an embodiment of the present invention.

As shown in FIG. 7, the terminal device 700 may include a receiving unit 701, a processing unit 702, and a sending unit 703.

The receiving unit 701 is configured to receive configuration parameter indication information of a demodulation reference signal, where the configuration parameter indication information includes an index.

A processing unit 702 is configured to determine, based on a mapping relationship that is between an index and a configuration parameter set and that is in a preset first demodulation reference signal mapping relationship set, a configuration parameter set corresponding to the received index, where the determined configuration parameter set includes a frequency-domain comb.

The sending unit 703 is configured to send the demodulation reference signal based on the determined configuration parameter set.

Optionally, the receiving unit 701 is further configured to: before receiving the configuration parameter indication information of the demodulation reference signal, receive demodulation reference signal mapping relationship set indication information, where the demodulation reference signal mapping relationship set indication information is used to indicate the first demodulation reference signal mapping relationship set in at least two preset demodulation reference signal mapping relationship sets.

Optionally, the configuration parameter set further includes at least one of a cyclic shift sequence and an orthogonal cover code combination, the first demodulation reference signal mapping relationship set includes at least two indexes, and the at least two indexes include a first index and a second index.

If four orthogonal cover codes in a first orthogonal cover code combination corresponding to the first index are respectively the same as four orthogonal cover codes in a second orthogonal cover code combination corresponding to the second index, a first frequency-domain comb corresponding to the first index is different from a second frequency-domain comb corresponding to the second index; or

if a first frequency-domain comb corresponding to the first index is the same as a second frequency-domain comb corresponding to the second index, four orthogonal cover codes in a first orthogonal cover code combination corresponding to the first index are respectively different from four orthogonal cover codes in a second orthogonal cover code combination corresponding to the second index.

Optionally, the configuration parameter set further includes at least one of a cyclic shift sequence and an orthogonal cover code combination, the first demodulation reference signal mapping relationship set includes at least two indexes, and the at least two indexes include a first index set and a second index set; in four orthogonal cover codes in an orthogonal cover code group corresponding to each index in the first index set, the first two orthogonal cover codes are the same, the second two orthogonal cover codes are the same, and the first two orthogonal cover codes are different from the second two orthogonal cover codes; four orthogonal cover codes in an orthogonal cover code group corresponding to each index in the second index set are the same.

The first index set includes at least a first index and a second index; and if the first two orthogonal cover codes in a first orthogonal cover code combination corresponding to the first index are respectively the same as the first two orthogonal cover codes in a second orthogonal cover code combination corresponding to the second index, a first frequency-domain comb corresponding to the first index is different from a second frequency-domain comb corresponding to the second index; or if a first frequency-domain comb corresponding to the first index is the same as a second frequency-domain comb corresponding to the second index, the first two orthogonal cover codes in a first orthogonal cover code combination corresponding to the first index are different from the first two orthogonal cover codes in a second orthogonal cover code combination corresponding to the second index; or

the second index set includes at least a third index and a fourth index; and if the first two orthogonal cover codes in a third orthogonal cover code combination corresponding to the third index are respectively the same as the first two orthogonal cover codes in a fourth orthogonal cover code combination corresponding to the fourth index, a third frequency-domain comb corresponding to the third index is different from a fourth frequency-domain comb corresponding to the fourth index; or if a third frequency-domain comb corresponding to the third index is the same as a fourth frequency-domain comb corresponding to the fourth index, four orthogonal cover codes in a third orthogonal cover code combination corresponding to the third index are different from four orthogonal cover codes in a fourth orthogonal cover code combination corresponding to the fourth index.

Optionally, the at least two demodulation reference signal mapping relationship sets further include a second demodulation reference signal mapping relationship set, and a configuration parameter set corresponding to an index in the second demodulation reference signal mapping relationship set does not include a frequency-domain comb.

Optionally, a receiving manner of the demodulation reference signal mapping relationship set indication information includes either of the following manners:

receiving by using downlink control information DCI related to uplink scheduling; and
receiving by using radio resource control RRC signaling.

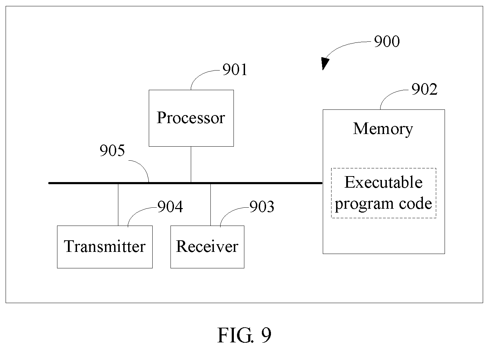

It should be noted that, the foregoing units are configured to perform related steps in the foregoing method. In this embodiment, the terminal device 700 is presented in a form of units. The "unit" herein may be an application-specific integrated circuit (application-specific integrated circuit, ASIC), a processor and a memory that are configured to execute one or more software or firmware programs, an integrated logic circuit, and/or another device capable of providing the foregoing functions. A person of ordinary skill in the art may know that a composition form of the terminal device 700 may be a terminal device shown in FIG. 9.

For example, functions of the foregoing receiving unit 701 may be implemented by the terminal device shown in FIG. 9. Specifically, a processor 901 invokes executable program code in a memory 903, to receive configuration parameter indication information of a demodulation reference signal by using a communications interface 902.

It can be learned that, in this embodiment of the present invention, the network device sends the configuration parameter indication information of the demodulation reference signal to the terminal device; and after receiving the configuration parameter indication information, the terminal device determines, based on the preset first demodulation reference signal mapping relationship set, the configuration parameter set corresponding to the index in the configuration parameter indication information, and sends the demodulation reference signal to the network device based on the configuration parameter set. Correspondingly, the network device receives the demodulation reference signal based on the configuration parameter set. The configuration parameter set includes the frequency-domain comb, and the frequency-domain comb can indicate a location of the demodulation reference signal in a preset frequency domain resource. In addition, the configuration parameter set including the frequency-domain comb and the orthogonal cover code allows the network device to support an application scenario in which more than two paired terminal devices having various layers perform MU-MIMO transmission and scheduling bandwidths of the paired terminal devices partially overlap.

FIG. 8 is a schematic structural diagram of a network device according to an embodiment of the present invention. As shown in FIG. 8, the network device 800 provided in this embodiment of the present invention includes a processor 801, a memory 802, a receiver 803, a transmitter 804, and a bus 805. The processor 801, the memory 802, the receiver 803, and the transmitter 804 are connected by using the bus 804 and communicate with each other.

The processor 801 is configured to invoke executable program code stored in the memory 802 to perform the following operations:

sending configuration parameter indication information of a demodulation reference signal by using the transmitter 804, where the configuration parameter indication information includes an index, the configuration parameter indication information is used to indicate a configuration parameter set corresponding to the index, the configuration parameter set includes a frequency-domain comb, and a mapping relationship between the configuration parameter set and the index is a mapping relationship in a preset first demodulation reference signal mapping relationship set; and

receiving, by using the receiver 803 based on the configuration parameter set, the demodulation reference signal sent by the terminal device.

It can be learned that, in this embodiment of the present invention, the network device sends the configuration parameter indication information of the demodulation reference signal to the terminal device; and after receiving the configuration parameter indication information, the terminal device determines, based on the preset first demodulation reference signal mapping relationship set, the configuration parameter set corresponding to the index in the configuration parameter indication information, and sends the demodulation reference signal to the network device based on the configuration parameter set. Correspondingly, the network device receives the demodulation reference signal based on the configuration parameter set. The configuration parameter set includes the frequency-domain comb, and the frequency-domain comb can indicate a location of the demodulation reference signal in a preset frequency domain resource. In addition, the configuration parameter set including the frequency-domain comb and the orthogonal cover code allows the network device to support an application scenario in which more than two paired terminal devices having various layers perform MU-MIMO transmission and scheduling bandwidths of the paired terminal devices partially overlap.

Optionally, before the processor 801 sends the configuration parameter indication information of the demodulation reference signal by using the interface circuit 802, the processor 801 is further configured to:

send demodulation reference signal mapping relationship set indication information by using the interface circuit 802, where the demodulation reference signal mapping relationship set indication information is used to indicate the first demodulation reference signal mapping relationship set in at least two preset demodulation reference signal mapping relationship sets.

Optionally, the configuration parameter set further includes at least one of a cyclic shift sequence and an orthogonal cover code combination, the first demodulation reference signal mapping relationship set includes at least two indexes, and the at least two indexes include a first index and a second index.

If four orthogonal cover codes in a first orthogonal cover code combination corresponding to the first index are respectively the same as four orthogonal cover codes in a second orthogonal cover code combination corresponding to the second index, a first frequency-domain comb corresponding to the first index is different from a second frequency-domain comb corresponding to the second index; or

if a first frequency-domain comb corresponding to the first index is the same as a second frequency-domain comb corresponding to the second index, four orthogonal cover codes in a first orthogonal cover code combination corresponding to the first index are respectively different from four orthogonal cover codes in a second orthogonal cover code combination corresponding to the second index.

Optionally, the configuration parameter set further includes at least one of a cyclic shift sequence and an orthogonal cover code combination, the first demodulation reference signal mapping relationship set includes at least two indexes, and the at least two indexes include a first index set and a second index set; in four orthogonal cover codes in an orthogonal cover code group corresponding to each index in the first index set, the first two orthogonal cover codes are the same, the second two orthogonal cover codes are the same, and the first two orthogonal cover codes are different from the second two orthogonal cover codes; four orthogonal cover codes in an orthogonal cover code group corresponding to each index in the second index set are the same.

The first index set includes at least a first index and a second index; and if the first two orthogonal cover codes in a first orthogonal cover code combination corresponding to the first index are respectively the same as the first two orthogonal cover codes in a second orthogonal cover code combination corresponding to the second index, a first frequency-domain comb corresponding to the first index is different from a second frequency-domain comb corresponding to the second index; or if a first frequency-domain comb corresponding to the first index is the same as a second frequency-domain comb corresponding to the second index, the first two orthogonal cover codes in a first orthogonal cover code combination corresponding to the first index are different from the first two orthogonal cover codes in a second orthogonal cover code combination corresponding to the second index; or

the second index set includes at least a third index and a fourth index; and if the first two orthogonal cover codes in a third orthogonal cover code combination corresponding to the third index are respectively the same as the first two orthogonal cover codes in a fourth orthogonal cover code combination corresponding to the fourth index, a third frequency-domain comb corresponding to the third index is different from a fourth frequency-domain comb corresponding to the fourth index; or if a third frequency-domain comb corresponding to the third index is the same as a fourth frequency-domain comb corresponding to the fourth index, four orthogonal cover codes in a third orthogonal cover code combination corresponding to the third index are different from four orthogonal cover codes in a fourth orthogonal cover code combination corresponding to the fourth index.

Optionally, the at least two demodulation reference signal mapping relationship sets further include a second demodulation reference signal mapping relationship set, and a configuration parameter set corresponding to an index in the second demodulation reference signal mapping relationship set does not include a frequency-domain comb.

Optionally, the demodulation reference signal mapping relationship set indication information that is used to indicate the first demodulation reference signal mapping relationship set is sent when the network device determines a first condition, and the first condition is: a manner in which the network device schedules the terminal device is a multiple-user multi-input multi-output MU-MIMO manner, and bandwidths scheduled by the network device for MU-MIMO paired terminal devices partially overlap, where a quantity of the MU-MIMO paired terminal devices is greater than 2.

Optionally, the processing unit 801 is further configured to: when determining a second condition, send, by using the interface circuit 802, demodulation reference signal mapping relationship set indication information that is used to indicate the second demodulation reference signal mapping relationship set, where the second condition is:

a manner in which the network device schedules the terminal device is a single-user SU manner; or a manner in which the network device schedules the terminal device is an MU-MIMO manner, and bandwidths scheduled by the network device for MU-MIMO paired terminal devices completely overlap; or a manner in which the network device schedules the terminal device is an MU-MIMO manner, and bandwidths scheduled by the network device for MU-MIMO paired terminal devices partially overlap, where a quantity of the MU-MIMO paired terminal devices is less than or equal to 2.

Optionally, a sending manner of the demodulation reference signal mapping relationship set indication information includes either of the following manners: sending by using downlink control information DCI related to uplink scheduling; and sending by using radio resource control RRC signaling.

In the foregoing embodiment shown in FIG. 6, the sending unit may be the transmitter, the receiving unit may be the receiver, the processing unit may be the processor, and the obtaining unit may be the processor, or may be the processor and the receiver.

FIG. 9 is a schematic structural diagram of a terminal device according to an embodiment of the present invention. As shown in FIG. 9, the terminal device provided in this embodiment of the present invention includes a processor 901, a memory 902, a receiver 903, a transmitter 904, and a bus 905. The processor 901, the memory 902, the receiver 903, and the transmitter 904 are connected by using the bus 905 and communicate with each other.

The processor 901 is configured to invoke executable program code stored in the memory 902 to perform the following operations:

receiving configuration parameter indication information of a demodulation reference signal by using the receiver 903, where the configuration parameter indication information includes an index;
determining, based on a mapping relationship that is between an index and a configuration parameter set and that is in a preset first demodulation reference signal mapping relationship set, a configuration parameter set corresponding to the received index, where the determined configuration parameter set includes a frequency-domain comb; and
sending, by using the transmitter 904, the demodulation reference signal based on the determined configuration parameter set.

It can be learned that, in this embodiment of the present invention, the network device sends the configuration parameter indication information of the demodulation reference signal to the terminal device; and after receiving the configuration parameter indication information, the terminal device determines, based on the preset first demodulation reference signal mapping relationship set, the configuration parameter set corresponding to the index in the configuration parameter indication information, and sends the demodulation reference signal to the network device based on the configuration parameter set. Correspondingly, the network device receives the demodulation reference signal based on the configuration parameter set. The configuration parameter set includes the frequency-domain comb, and the frequency-domain comb can indicate a location of the demodulation reference signal in a preset frequency domain resource. In addition, the configuration parameter set including the frequency-domain comb and the orthogonal cover code allows the network device to support an application scenario in which more than two paired terminal devices having various layers perform MU-MIMO transmission and scheduling bandwidths of the paired terminal devices partially overlap.

Optionally, before the processor 901 receives the configuration parameter indication information of the demodulation reference signal by using the communications interface 902, the processor 901 is further configured to receive demodulation reference signal mapping relationship set indication information by using the receiver 903, where the demodulation reference signal mapping relationship set indication information is used to indicate the first demodulation reference signal mapping relationship set in at least two preset demodulation reference signal mapping relationship sets.

Optionally, the configuration parameter set further includes at least one of a cyclic shift sequence and an orthogonal cover code combination, the first demodulation reference signal mapping relationship set includes at least two indexes, and the at least two indexes include a first index and a second index.

If four orthogonal cover codes in a first orthogonal cover code combination corresponding to the first index are respectively the same as four orthogonal cover codes in a second orthogonal cover code combination corresponding to the second index, a first frequency-domain comb corresponding to the first index is different from a second frequency-domain comb corresponding to the second index; or

if a first frequency-domain comb corresponding to the first index is the same as a second frequency-domain comb corresponding to the second index, four orthogonal cover codes in a first orthogonal cover code combination corresponding to the first index are respectively different from four orthogonal cover codes in a second orthogonal cover code combination corresponding to the second index.

Optionally, the configuration parameter set further includes at least one of a cyclic shift sequence and an orthogonal cover code combination, the first demodulation reference signal mapping relationship set includes at least two indexes, and the at least two indexes include a first index set and a second index set; in four orthogonal cover codes in an orthogonal cover code group corresponding to each index in the first index set, the first two orthogonal cover codes are the same, the second two orthogonal cover codes are the same, and the first two orthogonal cover codes are different from the second two orthogonal cover codes; four orthogonal cover codes in an orthogonal cover code group corresponding to each index in the second index set are the same.

The first index set includes at least a first index and a second index; and if the first two orthogonal cover codes in a first orthogonal cover code combination corresponding to the first index are respectively the same as the first two orthogonal cover codes in a second orthogonal cover code combination corresponding to the second index, a first frequency-domain comb corresponding to the first index is different from a second frequency-domain comb corresponding to the second index; or if a first frequency-domain comb corresponding to the first index is the same as a second frequency-domain comb corresponding to the second index, the first two orthogonal cover codes in a first orthogonal cover code combination corresponding to the first index are different from the first two orthogonal cover codes in a second orthogonal cover code combination corresponding to the second index; or

the second index set includes at least a third index and a fourth index; and if the first two orthogonal cover codes in a third orthogonal cover code combination corresponding to the third index are respectively the same as the first two orthogonal cover codes in a fourth orthogonal cover code combination corresponding to the fourth index, a third frequency-domain comb corresponding to the third index is different from a fourth frequency-domain comb corresponding to the fourth index; or if a third frequency-domain comb corresponding to the third index is the same as a fourth frequency-domain comb corresponding to the fourth index, four orthogonal cover codes in a third orthogonal cover code combination corresponding to the third index are different from four orthogonal cover codes in a fourth orthogonal cover code combination corresponding to the fourth index.

Optionally, the at least two demodulation reference signal mapping relationship sets further include a second demodulation reference signal mapping relationship set, and a configuration parameter set corresponding to an index in the second demodulation reference signal mapping relationship set does not include a frequency-domain comb.

Optionally, a receiving manner of the demodulation reference signal mapping relationship set indication information includes either of the following manners: receiving by using downlink control information DCI related to uplink scheduling; and receiving by using radio resource control RRC signaling.

It should be noted that the foregoing processor 801 or the processor 901 may be one processor, or may be a collective name for a plurality of processing elements. For example, the processor may be a central processing unit (Central Processing Unit, CPU), or may be an application-specific integrated circuit (Application Specific Integrated Circuit, ASIC) or one or more integrated circuits that are configured to implement the embodiments of the present invention, for example, one or more microprocessors (digital signal processor, DSP) or one or more field programmable gate arrays (Field Programmable Gate Array, FPGA).

The memory 802 and the memory 902 may be a read-only memory (read-only memory, ROM) or another type of static storage device capable of storing static information and an instruction, or a random access memory (random access memory, RAM) or another type of dynamic storage device capable of storing information and an instruction; or may be an electrically erasable programmable read-only memory (Electrically Erasable Programmable Read-Only Memory, EEPROM), a compact disc read-only memory (Compact Disc Read-Only Memory, CD-ROM) or another compact disc storage, optical disc storage (including a compact disc, a laser disc, an optical disc, a digital versatile disc, a Blu-ray disc, and the like), or magnetic disk storage medium or another magnetic storage device, or any other medium that can carry or store expected program code having an instruction or data structure form and capable of being accessed by a computer; but are not limited thereto. The memory may exist independently, and is connected to the processor by using a bus. Alternatively, the memory may be integrated with the processor.

The receiver 803 communicates with the processor 801, and may receive, in a plurality of manners, signaling sent by the terminal device. The receiver 903 communicates with the processor 901, and may receive, in a plurality of manners, signaling sent by the network device.

The transmitter 804 communicates with the processor 801, and may send information to the terminal device in a plurality of manners. The transmitter 904 communicates with the processor 901, and may send information to the network device in a plurality of manners.

The bus 805 or the bus 905 may be an industry standard architecture (Industry Standard Architecture, ISA) bus, a peripheral component interconnect (Peripheral Component, PCI) bus, an extended industry standard architecture (Extended Industry Standard Architecture, EISA) bus, or the like. The bus 904 may be classified into an address bus, a data bus, a control bus, and the like. For ease of notation, in FIG. 8, only one thick line is used to represent the bus, but it does not indicate that there is only one bus or only one type of bus.

In the foregoing embodiment shown in FIG. 7, the sending unit may be the transmitter, the receiving unit may be the receiver, the processing unit may be the processor, and the obtaining unit may be the processor, or may be the processor and the receiver.

In the foregoing embodiment shown in FIG. 5, method procedures of steps may be implemented based on a structure of the network device shown in FIG. 8 and a structure of the terminal device shown in FIG. 9.

An embodiment of the present invention further provides a computer storage medium. The computer storage medium may store a program, and when the program is executed, some or all of the steps of any demodulation reference signal transmission method recorded in the foregoing method embodiment may be performed.

It should be noted that, to make the description brief, the foregoing method embodiments are expressed as a series of actions. However, a person skilled in the art should appreciate that the present invention is not limited to the described action sequence, because according to the present invention, some steps may be performed in other sequences or performed simultaneously. In addition, a person skilled in the art should also appreciate that all the embodiments described in the specification are example embodiments, and the related actions and modules are not necessarily mandatory to the present invention.

In the foregoing embodiments, the description of each embodiment has respective focuses. For a part that is not described in detail in an embodiment, reference may be made to related descriptions in other embodiments.

In the several embodiments provided in this application, it should be understood that the disclosed apparatus may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit. The foregoing integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The computer software product is stored in a memory and includes several instructions for instructing a computer device (which may be a personal computer, a server, or a network device) to perform all or a part of the steps of the methods described in the embodiments of the present invention. The foregoing memory includes: any medium that can store program code, such as a USB flash drive, a read-only memory (ROM, Read-Only Memory), a random access memory (RAM, Random Access Memory), a removable hard disk, a magnetic disk, or an optical disc.

The embodiments of the present invention are described in detail above. The principle and implementation of the present invention are described herein by using specific examples. The description about the foregoing embodiments is merely provided to help understand the method and core ideas of the present invention. In addition, a person of ordinary skill in the art can make variations and modifications to the present invention in terms of the specific implementations and application scopes according to the ideas of the present invention. Therefore, the content of the specification shall not be construed as a limit to the present invention.

**Claims**

1. A demodulation reference signal transmission method, comprising:

    sending, by a network device, configuration parameter indication information of a demodulation reference signal to a terminal device, wherein the configuration parameter indication information comprises an index, the configuration parameter indication information is used to indicate a configuration parameter set corresponding to the index, the configuration parameter set comprises a frequency-domain comb, and a mapping relationship between the configuration parameter set and the index is a mapping relationship in a preset first demodulation reference signal mapping relationship set; and
    receiving, by the network device based on the configuration parameter set, the demodulation reference signal sent by the terminal device.

2. The method according to claim 1, wherein before the sending, by a network device, configuration parameter indication information of a demodulation reference signal to a terminal device, the method further comprises:
sending, by the network device, demodulation reference signal mapping relationship set indication information, wherein the demodulation reference signal mapping relationship set indication information is used to indicate the first demodulation reference signal mapping relationship set in at least two preset demodulation reference signal mapping relationship sets.

3. The method according to claim 1 or 2, wherein the configuration parameter set further comprises at least one of a cyclic shift sequence and an orthogonal cover code combination, the first demodulation reference signal mapping relationship set comprises at least two indexes, and the at least two indexes comprise a first index and a second index; if four orthogonal cover codes in a first orthogonal cover code combination corresponding to the first index are respectively the same as four orthogonal cover codes in a second orthogonal cover code combination corresponding to the second index, a first frequency-domain comb corresponding to the first index is different from a second frequency-domain comb corresponding to the second index; or
if a first frequency-domain comb corresponding to the first index is the same as a second frequency-domain comb corresponding to the second index, four orthogonal cover codes in a first orthogonal cover code combination corresponding to the first index are respectively different from four orthogonal cover codes in a second orthogonal cover code combination corresponding to the second index.

4. The method according to claim 1 or 2, wherein the configuration parameter set further comprises at least one of a cyclic shift sequence and an orthogonal cover code combination, the first demodulation reference signal mapping relationship set comprises at least two indexes, and the at least two indexes comprise a first index set and a second index set; in four orthogonal cover codes in an orthogonal cover code group corresponding to each index in the first index set, the first two orthogonal cover codes are the same, the second two orthogonal cover codes are the same, and the first two orthogonal cover codes are different from the second two orthogonal cover codes; four orthogonal cover codes in an orthogonal cover code group corresponding to each index in the second index set are the same;

    the first index set comprises at least a first index and a second index; and if the first two orthogonal cover codes in a first orthogonal cover code combination corresponding to the first index are respectively the same as the first two orthogonal cover codes in a second orthogonal cover code combination corresponding to the second index, a first frequency-domain comb corresponding to the first index is different from a second frequency-domain comb corresponding to the second index; or if a first frequency-domain comb corresponding to the first index is the same as a second frequency-domain comb corresponding to the second index, the first two orthogonal cover codes in a first orthogonal cover code combination corresponding to the first index are different from the first two orthogonal cover codes in a second orthogonal cover code combination corresponding to the second index; or

the second index set comprises at least a third index and a fourth index; and if the first two orthogonal cover codes in a third orthogonal cover code combination corresponding to the third index are respectively the same as the first two orthogonal cover codes in a fourth orthogonal cover code combination corresponding to the fourth index, a third frequency-domain comb corresponding to the third index is different from a fourth frequency-domain comb corresponding to the fourth index; or if a third frequency-domain comb corresponding to the third index is the same as a fourth frequency-domain comb corresponding to the fourth index, two orthogonal cover codes in a third orthogonal cover code combination corresponding to the third index are different from two orthogonal cover codes in a fourth orthogonal cover code combination corresponding to the fourth index.

5. The method according to any one of claims 2 to 4, wherein the at least two demodulation reference signal mapping relationship sets further comprise a second demodulation reference signal mapping relationship set, and a configuration parameter set corresponding to an index in the second demodulation reference signal mapping relationship set does not comprise a frequency-domain comb.

6. The method according to claim 5, wherein the demodulation reference signal mapping relationship set indication information that is used to indicate the first demodulation reference signal mapping relationship set is sent when the network device determines a first condition, and the first condition is:

a manner in which the network device schedules the terminal device is a multiple-user multi-input multi-output MU-MIMO manner, and bandwidths scheduled by the network device for MU-MIMO paired terminal devices partially overlap, wherein a quantity of the MU-MIMO paired terminal devices is greater than 2.

7. The method according to claim 6, wherein the method further comprises:

when determining a second condition, sending, by the network device, demodulation reference signal mapping relationship set indication information that is used to indicate the second demodulation reference signal mapping relationship set, wherein the second condition is:

a manner in which the network device schedules the terminal device is a single-user SU manner; or
a manner in which the network device schedules the terminal device is an MU-MIMO manner, and bandwidths scheduled by the network device for MU-MIMO paired terminal devices completely overlap; or
a manner in which the network device schedules the terminal device is an MU-MIMO manner, and bandwidths scheduled by the network device for MU-MIMO paired terminal devices partially overlap, wherein a quantity of the MU-MIMO paired terminal devices is less than or equal to 2.

8. The method according to claim 6 or 7, wherein a sending manner of the demodulation reference signal mapping relationship set indication information comprises either of the following manners:

sending by using downlink control information DCI related to uplink scheduling; and
sending by using radio resource control RRC signaling.

9. A demodulation reference signal transmission method, comprising:

receiving, by a terminal device, configuration parameter indication information of a demodulation reference signal, wherein the configuration parameter indication information comprises an index;
determining, by the terminal device based on a mapping relationship that is between an index and a configuration parameter set and that is in a preset first demodulation reference signal mapping relationship set, a configuration parameter set corresponding to the received index, wherein the determined configuration parameter set comprises a frequency-domain comb; and
sending, by the terminal device, the demodulation reference signal based on the determined configuration parameter set.

10. The method according to claim 9, wherein before the receiving, by a terminal device, configuration parameter indication information of a demodulation reference signal, the method further comprises:

receiving, by the terminal device, demodulation reference signal mapping relationship set indication information, wherein the demodulation reference signal mapping relationship set indication information is used to indicate the first demodulation reference signal mapping relationship set in at least two preset demodulation reference signal mapping relationship sets.

**11.** The method according to claim 9 or 10, wherein the configuration parameter set further comprises at least one of a cyclic shift sequence and an orthogonal cover code combination, the first demodulation reference signal mapping relationship set comprises at least two indexes, and the at least two indexes comprise a first index and a second index; if four orthogonal cover codes in a first orthogonal cover code combination corresponding to the first index are respectively the same as four orthogonal cover codes in a second orthogonal cover code combination corresponding to the second index, a first frequency-domain comb corresponding to the first index is different from a second frequency-domain comb corresponding to the second index; or

if a first frequency-domain comb corresponding to the first index is the same as a second frequency-domain comb corresponding to the second index, four orthogonal cover codes in a first orthogonal cover code combination corresponding to the first index are respectively different from four orthogonal cover codes in a second orthogonal cover code combination corresponding to the second index.

**12.** The method according to claim 9 or 10, wherein the configuration parameter set further comprises at least one of a cyclic shift sequence and an orthogonal cover code combination, the first demodulation reference signal mapping relationship set comprises at least two indexes, and the at least two indexes comprise a first index set and a second index set; in four orthogonal cover codes in an orthogonal cover code group corresponding to each index in the first index set, the first two orthogonal cover codes are the same, the second two orthogonal cover codes are the same, and the first two orthogonal cover codes are different from the second two orthogonal cover codes; four orthogonal cover codes in an orthogonal cover code group corresponding to each index in the second index set are the same;

the first index set comprises at least a first index and a second index; and if the first two orthogonal cover codes in a first orthogonal cover code combination corresponding to the first index are respectively the same as the first two orthogonal cover codes in a second orthogonal cover code combination corresponding to the second index, a first frequency-domain comb corresponding to the first index is different from a second frequency-domain comb corresponding to the second index; or if a first frequency-domain comb corresponding to the first index is the same as a second frequency-domain comb corresponding to the second index, the first two orthogonal cover codes in a first orthogonal cover code combination corresponding to the first index are different from the first two orthogonal cover codes in a second orthogonal cover code combination corresponding to the second index; or

the second index set comprises at least a third index and a fourth index; and if the first two orthogonal cover codes in a third orthogonal cover code combination corresponding to the third index are respectively the same as the first two orthogonal cover codes in a fourth orthogonal cover code combination corresponding to the fourth index, a third frequency-domain comb corresponding to the third index is different from a fourth frequency-domain comb corresponding to the fourth index; or if a third frequency-domain comb corresponding to the third index is the same as a fourth frequency-domain comb corresponding to the fourth index, four orthogonal cover codes in a third orthogonal cover code combination corresponding to the third index are different from four orthogonal cover codes in a fourth orthogonal cover code combination corresponding to the fourth index.

**13.** The method according to any one of claims 10 to 12, wherein the at least two demodulation reference signal mapping relationship sets further comprise a second demodulation reference signal mapping relationship set, and a configuration parameter set corresponding to an index in the second demodulation reference signal mapping relationship set does not comprise a frequency-domain comb.

**14.** The method according to claim 13, wherein a receiving manner of the demodulation reference signal mapping relationship set indication information comprises either of the following manners:

receiving by using downlink control information DCI related to uplink scheduling; and
receiving by using radio resource control RRC signaling.

**15.** A network device, comprising:

a sending unit, configured to send configuration parameter indication information of a demodulation reference signal, wherein the configuration parameter indication information comprises an index, the configuration parameter indication information is used to indicate a configuration parameter set corresponding to the index, the configuration parameter set comprises a frequency-domain comb, and a mapping relationship between the configuration parameter set and the index is a mapping relationship in a preset first demodulation reference signal mapping relationship set; and
a receiving unit, configured to receive, based on the configuration parameter set, the demodulation reference signal sent by the terminal device.

16. The network device according to claim 15, wherein
the sending unit is further configured to: before sending the configuration parameter indication information of the demodulation reference signal, send demodulation reference signal mapping relationship set indication information, wherein the demodulation reference signal mapping relationship set indication information is used to indicate the first demodulation reference signal mapping relationship set in at least two preset demodulation reference signal mapping relationship sets.

17. The network device according to claim 15 or 16, wherein the configuration parameter set further comprises at least one of a cyclic shift sequence and an orthogonal cover code combination, the first demodulation reference signal mapping relationship set comprises at least two indexes, and the at least two indexes comprise a first index and a second index;
if four orthogonal cover codes in a first orthogonal cover code combination corresponding to the first index are respectively the same as four orthogonal cover codes in a second orthogonal cover code combination corresponding to the second index, a first frequency-domain comb corresponding to the first index is different from a second frequency-domain comb corresponding to the second index; or
if a first frequency-domain comb corresponding to the first index is the same as a second frequency-domain comb corresponding to the second index, four orthogonal cover codes in a first orthogonal cover code combination corresponding to the first index are respectively different from four orthogonal cover codes in a second orthogonal cover code combination corresponding to the second index.

18. The network device according to claim 15 or 16, wherein the configuration parameter set further comprises at least one of a cyclic shift sequence and an orthogonal cover code combination, the first demodulation reference signal mapping relationship set comprises at least two indexes, and the at least two indexes comprise a first index set and a second index set; in four orthogonal cover codes in an orthogonal cover code group corresponding to each index in the first index set, the first two orthogonal cover codes are the same, the second two orthogonal cover codes are the same, and the first two orthogonal cover codes are different from the second two orthogonal cover codes; four orthogonal cover codes in an orthogonal cover code group corresponding to each index in the second index set are the same;

the first index set comprises at least a first index and a second index; and if the first two orthogonal cover codes in a first orthogonal cover code combination corresponding to the first index are respectively the same as the first two orthogonal cover codes in a second orthogonal cover code combination corresponding to the second index, a first frequency-domain comb corresponding to the first index is different from a second frequency-domain comb corresponding to the second index; or if a first frequency-domain comb corresponding to the first index is the same as a second frequency-domain comb corresponding to the second index, the first two orthogonal cover codes in a first orthogonal cover code combination corresponding to the first index are different from the first two orthogonal cover codes in a second orthogonal cover code combination corresponding to the second index; or
the second index set comprises at least a third index and a fourth index; and if the first two orthogonal cover codes in a third orthogonal cover code combination corresponding to the third index are respectively the same as the first two orthogonal cover codes in a fourth orthogonal cover code combination corresponding to the fourth index, a third frequency-domain comb corresponding to the third index is different from a fourth frequency-domain comb corresponding to the fourth index; or if a third frequency-domain comb corresponding to the third index is the same as a fourth frequency-domain comb corresponding to the fourth index, four orthogonal cover codes in a third orthogonal cover code combination corresponding to the third index are different from four orthogonal cover codes in a fourth orthogonal cover code combination corresponding to the fourth index.

19. The network device according to any one of claims 15 to 18, wherein the at least two demodulation reference signal mapping relationship sets further comprise a second demodulation reference signal mapping relationship set, and a configuration parameter set corresponding to an index in the second demodulation reference signal mapping relationship set does not comprise a frequency-domain comb.

20. The network device according to claim 19, wherein the demodulation reference signal mapping relationship set indication information that is used to indicate the first demodulation reference signal mapping relationship set is sent when the network device determines a first condition, and the first condition is:
a manner in which the network device schedules the terminal device is a multiple-user multi-input multi-output MU-MIMO manner, and bandwidths scheduled by the network device for MU-MIMO paired terminal devices partially overlap, wherein a quantity of the MU-MIMO paired terminal devices is greater than 2.

21. The network device according to claim 20, wherein the network device further comprises:
a processing unit, configured to: when determining a second condition, send, by using the sending unit, demodulation reference signal mapping relationship set indication information that is used to indicate the second demodulation reference signal mapping relationship set, wherein the second condition is:

a manner in which the network device schedules the terminal device is a single-user SU manner; or
a manner in which the network device schedules the terminal device is an MU-MIMO manner, and bandwidths scheduled by the network device for MU-MIMO paired terminal devices completely overlap; or
a manner in which the network device schedules the terminal device is an MU-MIMO manner, and bandwidths scheduled by the network device for MU-MIMO paired terminal devices partially overlap, wherein a quantity of the MU-MIMO paired terminal devices is less than or equal to 2.

22. The network device according to claim 20 or 21, wherein a sending manner of the demodulation reference signal mapping relationship set indication information comprises either of the following manners:

sending by using downlink control information DCI related to uplink scheduling; and
sending by using radio resource control RRC signaling.

23. A terminal device, comprising:

a receiving unit, configured to receive configuration parameter indication information of a demodulation reference signal, wherein the configuration parameter indication information comprises an index;
a processing unit, configured to determine, based on a mapping relationship that is between an index and a configuration parameter set and that is in a preset first demodulation reference signal mapping relationship set, a configuration parameter set corresponding to the received index, wherein the determined configuration parameter set comprises a frequency-domain comb; and
a sending unit, configured to send the demodulation reference signal based on the determined configuration parameter set.

24. The terminal device according to claim 23, wherein
the receiving unit is further configured to: before receiving the configuration parameter indication information of the demodulation reference signal, receive demodulation reference signal mapping relationship set indication information, wherein the demodulation reference signal mapping relationship set indication information is used to indicate the first demodulation reference signal mapping relationship set in at least two preset demodulation reference signal mapping relationship sets.

25. The terminal device according to claim 23 or 24, wherein the configuration parameter set further comprises at least one of a cyclic shift sequence and an orthogonal cover code combination, the first demodulation reference signal mapping relationship set comprises at least two indexes, and the at least two indexes comprise a first index and a second index;
if four orthogonal cover codes in a first orthogonal cover code combination corresponding to the first index are respectively the same as four orthogonal cover codes in a second orthogonal cover code combination corresponding to the second index, a first frequency-domain comb corresponding to the first index is different from a second frequency-domain comb corresponding to the second index; or
if a first frequency-domain comb corresponding to the first index is the same as a second frequency-domain comb corresponding to the second index, four orthogonal cover codes in a first orthogonal cover code combination corresponding to the first index are respectively different from four orthogonal cover codes in a second orthogonal cover code combination corresponding to the second index.

26. The terminal device according to claim 23 or 24, wherein the configuration parameter set further comprises at least one of a cyclic shift sequence and an orthogonal cover code combination, the first demodulation reference signal mapping relationship set comprises at least two indexes, and the at least two indexes comprise a first index set and a second index set; in four orthogonal cover codes in an orthogonal cover code group corresponding to each index in the first index set, the first two orthogonal cover codes are the same, the second two orthogonal cover codes are the same, and the first two orthogonal cover codes are different from the second two orthogonal cover codes; four orthogonal cover codes in an orthogonal cover code group corresponding to each index in the second index set are the same;

the first index set comprises at least a first index and a second index; and if the first two orthogonal cover codes in a first orthogonal cover code combination corresponding to the first index are respectively the same as the first two orthogonal cover codes in a second orthogonal cover code combination corresponding to the second index, a first frequency-domain comb corresponding to the first index is different from a second frequency-domain comb corresponding to the second index; or if a first frequency-domain comb corresponding to the first index is the same as a second frequency-domain comb corresponding to the second index, the first two orthogonal cover codes in a first orthogonal cover code combination corresponding to the first index are different from the first two orthogonal cover codes in a second orthogonal cover code combination corresponding to the second index; or

the second index set comprises at least a third index and a fourth index; and if the first two orthogonal cover codes in a third orthogonal cover code combination corresponding to the third index are respectively the same as the first two orthogonal cover codes in a fourth orthogonal cover code combination corresponding to the fourth index, a third frequency-domain comb corresponding to the third index is different from a fourth frequency-domain comb corresponding to the fourth index; or if a third frequency-domain comb corresponding to the third index is the same as a fourth frequency-domain comb corresponding to the fourth index, four orthogonal cover codes in a third orthogonal cover code combination corresponding to the third index are different from four orthogonal cover codes in a fourth orthogonal cover code combination corresponding to the fourth index.

27. The terminal device according to any one of claims 24 to 26, wherein the at least two demodulation reference signal mapping relationship sets further comprise a second demodulation reference signal mapping relationship set, and a configuration parameter set corresponding to an index in the second demodulation reference signal mapping relationship set does not comprise a frequency-domain comb.

28. The terminal device according to claim 26 or 27, wherein a receiving manner of the demodulation reference signal mapping relationship set indication information comprises either of the following manners:

receiving by using downlink control information DCI related to uplink scheduling; and
receiving by using radio resource control RRC signaling.

29. A network device, comprising:

a processor, a memory, a receiver, a transmitter, and a bus, wherein the processor, the receiver, the transmitter, and the memory are connected by using the bus and communicate with each other; and
the processor is configured to invoke executable program code stored in the memory and perform the method described in any one of claims 1 to 8.

30. A terminal device, comprising:

a processor, a memory, a receiver, a transmitter, and a bus, wherein the processor, the receiver, the transmitter, and the memory are connected by using the bus and communicate with each other; and
the processor is configured to invoke executable program code stored in the memory and perform the method described in any one of claims 9 to 14.

Subcarrier

Symbol

☐ PUSCH

▨ DMRS

FIG. 1

System bandwidth

Scheduling bandwidth 1

UE1

Scheduling bandwidth 2

UE2

Scheduling bandwidth 3

UE3

FIG. 2

Subcarrier

Symbol

☐ PUSCH    ⧄ DMRS 1    ▦ DMRS 2

FIG. 3

Network device

Terminal device

Core network device

FIG. 4

Network device

Terminal
device

S501. Send configuration parameter indication
information of a demodulation reference signal to user
equipment, where the configuration parameter
indication information includes an index, the
configuration parameter indication information is used
to indicate a configuration parameter set corresponding
to the index, the configuration parameter set includes a
frequency-domain comb, and a mapping relationship
between the configuration parameter set and the index is
a mapping relationship in a preset first demodulation
reference signal mapping relationship set

Configuration parameter
indication information

S502. Receive the configuration parameter indication
information of the demodulation reference signal, where
the configuration parameter indication information
includes the index

S503. Determine, based on the mapping relationship that
is between the index and the configuration parameter set
and that is in the preset first demodulation reference
signal mapping relationship set, the configuration
parameter set corresponding to the received index,
where the determined configuration parameter set
includes the frequency-domain comb

S504. Send the demodulation reference signal based on
the determined configuration parameter set

Demodulation reference signal

S505. Receive, based on the configuration
parameter set, the demodulation reference
signal sent by the user equipment

FIG. 5

Network device

FIG. 6

Terminal device

FIG. 7

FIG. 8

FIG. 9

<table>
<tr><td colspan="2"><strong>INTERNATIONAL SEARCH REPORT</strong></td><td>International application No.<br>PCT/CN2016/094669</td></tr>
</table>

**A. CLASSIFICATION OF SUBJECT MATTER**

H04L 5/00 (2006.01) i

According to International Patent Classification (IPC) or to both national classification and IPC

**B. FIELDS SEARCHED**

Minimum documentation searched (classification system followed by classification symbols)

H04L; H04Q; H04W

Documentation searched other than minimum documentation to the extent that such documents are included in the fields searched

Electronic data base consulted during the international search (name of data base and, where practicable, search terms used)

CNPAT, WPI, EPODOC, CNKI, 3GPP: DRMS, index, map, group, set, comb broach, CS, cyclic shift, Orthogonal Cover Code, OCC, IFDM

**C. DOCUMENTS CONSIDERED TO BE RELEVANT**

| Category* | Citation of document, with indication, where appropriate, of the relevant passages | Relevant to claim No. |
|---|---|---|
| X | US 2014036850 A1 (SHARP KABUSHIKI KAISHA) 06 February 2014 (06.02.2014) description, paragraphs [0060]-[0081], and figures 3 and 5 | 1-30 |
| X | US 2015312009 A1 (NOKIA TECHNOLOGIES OY) 29 October 2015 (29.10.2015) description, paragraphs [0061]-[0094] | 1-30 |
| A | WO 2013074031 A1 (TELEFONAKTIEBOLAGET L M ERICSSON) 23 May 2013 (23.05.2013) the whole document | 1-30 |
| A | CN 1801680 A (HUAWEI TECHNOLOGIES CO., LTD.) 12 July 2006 (12.07.2006) the whole document | 1-30 |
| A | US 2016020878 A1 (SHARP KABUSHIKI KAISHA) 21 January 2016 (21.01.2016) the whole document | 1-30 |

☐ Further documents are listed in the continuation of Box C.　　☒ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | "X" | document of particular relevance; the claimed invention cannot be considered novel or cannot be considered to involve an inventive step when the document is taken alone |
| "E" earlier application or patent but published on or after the international filing date | | |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| 06 April 2017 | 03 May 2017 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br>ZHANG, Xingsu<br>Telephone No. (86-10) 62413857 |

Form PCT/ISA/210 (second sheet) (July 2009)

## INTERNATIONAL SEARCH REPORT
### Information on patent family members

International application No.

PCT/CN2016/094669

| Patent Documents referred in the Report | Publication Date | Patent Family | Publication Date |
|---|---|---|---|
| US 2014036850 A1 | 06 February 2014 | WO 2012141054 A1 | 18 October 2012 |
| | | JP 2012222722 A | 12 November 2012 |
| US 2015312009 A1 | 29 October 2015 | WO 2014096909 A1 | 26 June 2014 |
| WO 2013074031 A1 | 23 May 2013 | EP 2781068 A1 | 24 September 2014 |
| | | US 2014307699 A1 | 16 October 2014 |
| CN 1801680 A | 12 July 2006 | WO 2007022715 A1 | 01 March 2007 |
| | | CN 101176285 A | 07 May 2008 |
| US 2016020878 A1 | 21 January 2016 | WO 2014136360 A1 | 12 September 2014 |
| | | JP 2016103663 A | 02 June 2016 |

Form PCT/ISA /210 (patent family annex) (July 2009)